# EUROPEAN PATENT SPECIFICATION

(11) **EP 2 813 148 B1**
(45) Date of publication and mention of the grant of the patent: **19.08.2020**
(21) Application number: 13746905.2
(22) Date of filing: 06.02.2013
(51) Int. Cl.: A23L 27/00, A23L 27/20, A23L 27/50, A23L 27/60, A23L 23/00, A23L 2/56, A23F 5/24

(54) **COMPOSITION FOR IMPARTING BODY TASTE TO FOODS AND DRINKS**
ZUSAMMENSETZUNG ZUR HERSTELLUNG EINES TRÄGERGESCHMACKS AUF NAHRUNGSMITTELN UND GETRÄNKEN
COMPOSITION POUR CONFÉRER UN GOÛT PRONONCÉ À DES ALIMENTS ET DES BOISSONS

(30) Priority: 06.02.2012 JP 2012023551
(43) Date of publication of application: 17.12.2014
(73) Proprietor: AJINOMOTO CO., INC., Chuo-ku Tokyo 104-8315 (JP)
(72) Inventor: ASO, Yuihaku, Kawasaki-shi Kanagawa 210-8681 (JP); NAGASAKI, Hiroaki, Kawasaki-shi Kanagawa 210-8681 (JP); JO, Shuichi, Kawasaki-shi Kanagawa 210-8681 (JP)
(74) Representative: Strehl Schübel-Hopf & Partner
(86) International application number: PCT/JP2013/052668
(87) International publication number: WO 2013/118742

(56) References cited:
- EP-A2- 2 299 271
- WO-A1-2011/030650
- WO-A1-2012/020598
- CA-A1- 2 774 033
- JP-A- 2005 015 683
- JP-A- 2005 015 684
- JP-A- 2009 514 791
- JP-A- 2010 158 210
- RICHARD A WILSON ET AL: "Review of Literature on Chicken Flavor and Report of Isolation of Several New Chicken Flavor Components from Aqueous Cooked Chicken Broth", JOURNAL OF AGRICULTURAL AND FOOD CHEMISTRY,, vol. 20, no. 4, 1 July 1972 (1972-07-01), pages 741-747, XP001350231,

## Description

### Technical Field

The present invention relates to a composition capable of imparting rich and continuous kokumi taste to food and drink, which does not mask the top aroma and/or flavor of food or drink, and does not cut the last aroma and/or flavor.

Also, the present invention relates to a food or drink imparted with rich and continuous kokumi taste, which sufficiently has the top aroma and/or flavor, as well as the last aroma and/or flavor, and a production method of such food or drink.

### Background Art

In food region, flavor substances have long been applied. Particularly, substances having five basic tastes represented by sweet taste, salty taste, sour taste, bitter taste and umami, and substances enhancing them are widely used as seasoning.

On the other hand, as a sensation that cannot be described by the above-mentioned five basic tastes, "kokumi taste" exists. *Kokumi* taste expresses a sensation undescribable with the above-mentioned five basic tastes, which is a state where not only the basic tastes but also marginal tastes and flavors of basic taste such as thickness, growth (mouthfulness), continuity, harmony and the like are also enhanced. Conventional, some substances for imparting kokumi taste to foods or drinks and the like (kokumi taste-imparting substances) have been reported, and glutathione (patent document 1), a heated product of gelatin and tropomyosin (patent document 2), a sulfone group-containing compound (patent document 3), peptide containing Asn-His sequence (patent document 4) and the like have been reported.

Thus, the development of various kokumi taste-imparting substances has conventionally been tried and commercialization has been deployed with a focus on the extracts of naturally occurring substances. As the situation stands, however, a pure kokumi taste component was separated from an extract of naturally occurring substances only in an extremely small number of cases such as glutathione, N-(4-methyl-5-oxo-1-imidazolin-2-yl)sarcosine and the like.

Therefore, the development of a high-property, safe and economical kokumi taste-imparting substance hereafter is required.

Patent documents 5, 6 report a high-property, safe and economical kokumi taste-imparting agent, production methods of foods or drinks such as foods, seasoning, drinks and the like imparted with kokumi taste, and foods or drinks and the like imparted with kokumi taste.

### [Document List]

### [patent documents]

patent document 1: JP-B-1464928
patent document 2: JP-A-10-276709
patent document 3: JP-A-8-289760
patent document 4: WO 2004/096836
patent document 5: JP-B-4798293
patent document 6: JP-A-2011-115186

### SUMMARY OF THE INVENTION

### Problems to be Solved by the Invention

Patent document 5, 6 report that at least one kind of salty taste, umami, sweet taste and sour taste can be enhanced by the use of a kokumi taste-imparting agent. However, a problem was found in that a kokumi taste-imparting agent masks the top aroma and/or flavor of food or drink, and cuts the last aroma and/or flavor. To solve the problem, a savory seasoning and the like were used in combination to compensate for and reinforce the top aroma and/or flavor and the last aroma and/or flavor. However, aroma and/or flavor preferable as the top aroma and/or flavor, as well as the last aroma and/or flavor could not be imparted sufficiently.

With the above-mentioned background, an object of the present invention is to provide a composition capable of imparting rich and continuous kokumi taste to food or drink, which does not mask the top aroma and/or flavor of food or drink, and does not cut the last aroma and/or flavor.

Also, the present invention aims to provide a food or drink imparted with rich and continuous kokumi taste, which sufficiently has top aroma and/or flavor, as well as the last aroma and/or flavor, and a production method of such food or drink.

### Means of Solving the Problems

The present inventors have conducted intensive studies of the aforementioned problems and surprisingly found that a combined use of a kokumi taste-imparting substance and 1-octen-3-ol and/or 1-octen-3-one can impart rich and continuous kokumi taste to food or drink, without masking the top aroma and/or flavor of food or drink, and without cutting the last aroma and/or flavor.

Furthermore, the present inventors have surprisingly found that a still more preferable top aroma and/or flavor can be imparted to food or drink by using lower fatty acids and methional in combination in addition to a kokumi taste-imparting substance, and 1-octen-3-ol and/or 1-octen-3-one.

Also, the present inventors have surprisingly found that a still more preferable top aroma and/or flavor can be imparted to food or drink by using octanoic acid and decanoic acid in combination in addition to a kokumi taste-imparting substance, and 1-octen-3-ol and/or 1-octen-3-one.

The present inventors have further studied based on these findings and completed the present invention.

Accordingly, the present invention provides the following.

[1] A composition for imparting kokumi taste to a food or drink, comprising a kokumi taste-imparting substance and 1-octen-3-ol and/or 1-octen-3-one, wherein the kokumi taste-imparting substance is one or more kinds selected from the group consisting of of γ-Glu-X-Gly (X is amino acid or amino acid derivative), γ-Glu-Val-Y (Y is amino acid or amino acid derivative), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me) (O), γ-Glu-Leu, γ-Glu-Ile, γ-Glu-t-Leu and γ-Glu-Cys(S-Me), the content of the kokumi tast-imparting substance in the composition is not less than 0.001 weight ppm and not more than 99.9 wt%, and the content of 1-octen-3-ol and/or 1-octen-3-one in the composition is 0.000005 weight ppm - 99.9 wt%, wherein the composition additionally comprises (i) lower fatty acid and methional, and/or (ii) octanoic acid and decanoic acid.
[2] The composition according to [1], wherein the content of lower fatty acid in the composition is 0.001 weight ppm - 99.9 wt%, and the content of methional in the composition is 0.00001 weight ppm - 99.9 wt%.
[3] The composition according to [1], wherein the content of octanoic acid in the composition is 0.001 weight ppm - 99.9 wt%, and the content of decanoic acid in the composition is 0.001 weight ppm - 99.9 wt%.
[4] The composition according to [1], comprising lower fatty acid, methional, octanoic acid and decanoic acid.
[5] A production method of a food or drink, comprising a step of adding a kokumi taste-imparting substance and 1-octen-3-ol and/or 1-octen-3-one, wherein the kokumi taste-imparting substance is one or more kinds selected from the group consisting of of γ-Glu-X-Gly (X is amino acid or amino acid derivative), γ-Glu-Val-Y (Y is amino acid or amino acid derivative), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me) (O), γ-Glu-Leu, γ-Glu-Ile, γ-Glu-t-Leu and y-Glu-Cys(S-Me), the concentration of the kokumi taste-imparting substance to be added relative to the food or drink is not less than 0.001 weight ppm and not more than 99.9 wt%, and the concentration of 1-octen-3-ol and/or 1-octen-3-one to be added relative to the food or drink is not less than 0.000005 weight ppm and not more than 0,91 weight ppm, wherein the method further comprises (i) a step of adding lower fatty acid and methional, and/or (ii) a step of adding octanoic acid and decanoic acid.
[6] The method according to [5], wherein the concentration of lower fatty acid to be added relative to the food or drink is not less than 0.001 weight ppm and not more than 19.3 weight ppm, and the concentration of methional to be added relative to the food or drink is not less than 0.00001 weight ppm and not more than 150 weight ppm.
[7] The method according to [5], wherein the concentration of octanoic acid to be added relative to the food or drink is not less than 0.001 weight ppm and not more than 130 weight ppm, and the concentration of decanoic acid to be added relative to the food or drink is not less than 0.001 weight ppm and not more than 390 weight ppm.
[8] The method according to [5], comprising a step of adding lower fatty acid, methional, octanoic acid and decanoic acid.
[9] A food or drink produced by the method according to any one of [5] to [8].

### Effect of the Invention

According to the present invention, a composition capable of imparting rich and continuous kokumi taste to a food or drink, without masking the top aroma and/or flavor of the food or drink, and without cutting the last aroma and/or flavor, can be provided.

According to the present invention, moreover, a food or drink imparted with rich and continuous kokumi taste, which sufficiently has top aroma and/or flavor, as well as the last aroma and/or flavor, and a production method of such food or drink can be provided.

### Description of Embodiments

In the present specification, "kokumi taste" means a sensation that cannot be expressed by five basic tastes represented by sweet taste, salty taste, sour taste, bitter taste, and umami, which is a state where not only the basic tastes but also marginal tastes and flavors of basic taste such as thickness, growth (mouthfulness), continuity, harmony and the like are also enhanced. The "composition for imparting kokumi taste to food or drink" and "kokumi taste-imparting substance" refers to a composition and a substance capable of enhancing the five basic tastes represented by sweet taste, salty taste, sour taste, bitter taste, and umami, and marginal tastes of basic taste such as thickness, growth (mouthfulness), continuity, harmony and the like as well as a flavor associated therewith. Therefore, the composition of the present invention can also be used as a sweet taste enhancing agent, a salty taste enhancing agent, a sour taste enhancing agent, a bitter taste enhancing agent, or an umami enhancing agent.

In the present specification, the "aroma" means an odor (orthonasal flavor) that can be felt by nose alone without eating or drinking. The "flavor" means an odor (retronasal flavor) that passes from the oral cavity to nose during eating or drinking.

In the present specification, the "top aroma and/or flavor" means an aroma and/or a flavor felt in 0 second to less than 2 seconds after eating, and "mask the top aroma and/or flavor" means weakening the top aroma and/or flavor to make it less easily felt. The "last aroma and/or flavor" means an aroma and/or a flavor felt after 5 seconds from eating, and "cut the last aroma and/or flavor" means weakening the last aroma and/or flavor to make it less easily felt.

In the present specification, each amino acid and amino acid constituting each peptide are both L-forms, unless particularly specified.

### [composition for imparting kokumi taste to food or drink]

A composition for imparting kokumi taste to the food or drink contains a kokumi taste-imparting substance, and 1-octen-3-ol and/or 1-octen-3-one.

### (kokumi taste-imparting substance)

Examples of the kokumi taste-imparting substance used for the composition of the present invention include glutathione, peptides described in WO 2007/055393, peptides described in WO 2010/114022, peptides described in WO 2011/081185, and peptides described in WO 2011/081186. Specifically, one or more kinds selected from the group consisting of γ-Glu-X-Gly (X is amino acid or amino acid derivative), γ-Glu-Val-Y (Y is amino acid or amino acid derivative), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met (O), γ-Glu-γ-Glu-Val, γ-Glu-Val-NH₂, γ-Glu-Val-ol, γ-Glu-Ser, γ-Glu-Tau, γ-Glu-Cys(S-Me) (O), γ-Glu-Leu, γ-Glu-Ile, γ-Glu-t-Leu and γ-Glu-Cys(S-Me) are mentioned (hereinafter to be also referred to as "peptide and amino acid to be used in the present invention").

As X of "γ-Glu-X-Gly (X is amino acid or amino acid derivative)", one kind selected from the group consisting of Val, N-Val, Cys, Cys(SNO), Cys(S-allyl), Gly, Cys(S-Me), t-Leu, Abu and Ser is preferable.

As Y of "γ-Glu-Val-Y (Y is amino acid or amino acid derivative)", one kind selected from the group consisting of Gly, Val, Glu, Lys, Phe, Ser, Pro, Arg, Asp, Met, Thr, His, Orn, Asn, Cys and Gln is preferable.

Among the peptides and amino acids to be used in the present invention, γ-Glu-X-Gly (X is Val, N-Val, Cys, Cys(SNO), Cys(S-allyl), Gly, Cys(S-Me), t-Leu, Abu or Ser) or γ-Glu-Val-Y (Y is Gly, Val, Glu, Lys, Phe, Ser, Pro, Arg, Asp, Met, Thr, His, Orn, Asn, Cys or Gln), γ-Glu-Abu, γ-Glu-N-Val is preferable.

Here, amino acid includes, for example, neutral amino acids such as Gly, Ala, Val, Leu, Ile, Ser, Thr, Cys, Met, Asn, Gln, Pro, and Hyp; acidic amino acids such as Asp, and Glu; basic amino acids such as Lys, Arg, and His; aromatic amino acids such as Phe, Tyr, and Trp; homoserine, citrulline, ornithine, α-aminobutyric acid, norvaline, norleucine, and taurine.

In the present specification, abbreviations of amino group residues mean the following amino acids.

| | | |
|---|---|---|
| (1) | Gly: | glycine |
| (2) | Ala: | alanine |
| (3) | Val: | valine |
| (4) | Leu: | leucine |
| (5) | Ile: | isoleucine |
| (6) | Met: | methionine |
| (7) | Phe: | phenylalanine |
| (8) | Tyr: | tyrosine |
| (9) | Trp: | tryptophan |

| | | |
|---|---|---|
| (10) | His: | histidine |
| (11) | Lys: | lysine |
| (12) | Arg: | arginine |
| (13) | Ser: | serine |
| (14) | Thr: | threonine |
| (15) | Asp: | aspartic acid |
| (16) | Glu: | glutamic acid |
| (17) | Asn: | asparagine |
| (18) | Gln: | glutamine |
| (19) | Cys: | cysteine |
| (20) | Pro: | proline |
| (21) | Orn: | ornithine |
| (22) | Sar: | sarcosine |
| (23) | Cit: | citrulline |
| (24) | N-Val: | norvaline |
| (25) | N-Leu: | norleucine |
| (26) | Abu: | α-aminobutyric acid |
| (27) | Tau: | taurine |
| (28) | Hyp: | hydroxyproline |
| (29) | t-Leu: | tert-leucine |

Amino acid derivative includes various derivatives of the above-mentioned amino acids and, for example, special amino acid, unnatural amino acid, amino alcohol, or amino acid whose amino acid side chain such as terminal carbonyl group, amino group, thiol group of cysteine and the like is substituted by various substituents. Examples of the substituent include alkyl group, acyl group, hydroxyl group, amino group, alkylamino group, nitro group, sulfonyl group, various protecting groups and the like. Specific examples of the amino acid derivative include Arg(NO₂): N-γ-nitroarginine, Cys(SNO): S-nitrocysteine, Cys(S-Me): S-methylcysteine, Cys(S-allyl): S-allylcysteine, Val-NH₂: valine amide, Val-ol: valinol (2-amino-3-methyl-1-butanol) and the like.

In the present specification, γ-Glu-Cys(SNO)-Gly has the following structural formula. (O) in the above-mentioned γ-Glu-Met (O) and γ-Glu-Cys(S-Me) (O) means a sulfoxide structure. (γ) in γ-Glu means that other amino acid is bonded via a carboxyl group at the γ-position of glutamic acid.

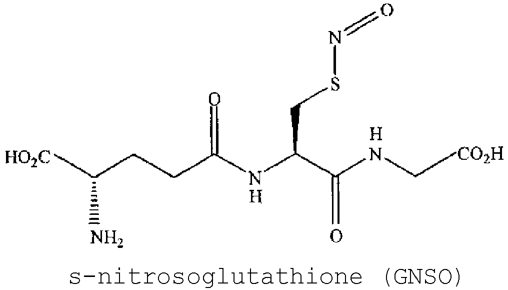

When the peptide and amino acid to be used in the present invention are commercially available, commercially available products can be used. Peptide can be obtained by appropriately using a known technique such as (1) chemical synthetic method, (2) synthetic technique by enzymatical reaction and the like. The chemical synthetic technique is convenient for the peptide used in the present invention, since the residue number of the contained amino acid is comparatively short and is 2 - 3 residues. For chemical synthesis, the oligo-peptide is synthesized or semi-synthesized by a peptide-synthesizer. Examples of the chemical synthetic technique include a solid-phase peptide synthesis technique. The thus-synthesized peptide can be purified by a general means, such as ionexchange chromatography, reversed-phase high performance liquid chromatography, affinity chromatography and the like. Such solid-phase peptide synthesis technique, followed by purification of peptide is well known in the technical field.

Also, peptide used in the present invention can also be produced by an enzyme reaction. For example, the method described in WO 2004/011653 can be used. To be specific, amino acid or dipeptide wherein one of the terminal carboxyl groups of the amino acid or dipeptide is esterified or amidated, and amino acid having a free amino group (for example, amino acid having protected carboxyl group) are reacted in the presence of a peptide-forming enzyme, and the resulting dipeptide or tripeptide is purified, whereby peptide can also be produced. Examples of the peptide-forming enzyme include a culture of microorganism capable of producing peptide, microorganism fungus kokumi separated from the culture, treated fungus kokumi of the microorganism and a peptide-forming enzyme derived from the microorganism.

The peptide and amino acid to be used in the present invention can also be obtained by utilizing the screening methods described in, for example, JP-B-4798293, JP-A-2011-115186 and the like.

The peptide and amino acid to be used in the present invention encompass salt forms. When the peptide and amino acid to be used in the present invention are in the form of a salt, the salt only needs to be pharmacologically acceptable. For acidic groups such as carboxyl group and the like, for example, ammonium salt; salt with alkali metal such as sodium, potassium and the like; salt with alkaline earth metal such as calcium, magnesium and the like; aluminum salt; zinc salt; salt with organic amine such as triethylamine, ethanolamine, morpholine, pyrrolidine, piperidine, piperazine, dicyclohexylamine and the like; salt with basic amino acid such as arginine, lysine and the like; and the like can be mentioned. For basic group, salt with inorganic acid such as hydrochloric acid, sulfuric acid, phosphoric acid, nitric acid, hydrobromic acid and the like; salt with organic carboxylic acid such as acetic acid, citric acid, benzoic acid, maleic acid, fumaric acid, tartaric acid, succinic acid, tannic acid, butyric acid, hibenzoic acid, pamoic acid, enanthic acid, decanoic acid, teoclic acid, salicylic acid, lactic acid, oxalic acid, mandelic acid, malic acid and the like; salt with organic sulfonic acid such as methanesulfonic acid, benzenesulfonic acid, p-toluenesulfonic acid and the like; and the like can be mentioned.

The kokumi taste-imparting substance used for the composition of the present invention is preferably γ-Glu-Val-Gly, γ-Glu-Cys-Gly(glutathione), γ-Glu-N-Val or y-Glu-N-Val-Gly, particularly preferably γ-Glu-Val-Gly or glutathione. γ-Glu-Val-Gly is an existing peptide wherein 3 kinds of amino acids of glutamic acid (Glu), valine (Val) and glycine (Gly) are bonded. Specifically, it is a peptide wherein the amino group of valine forms a peptide bond with the carboxyl group at the γ-position of glutamic acid, the amino group of glycine forms a peptide bond with the carboxyl group of valine, and glutamic acid, valine, glycine are sequenced in this order. The structural formula thereof is shown below. In the present invention, γ-Glu-Val-Gly encompasses any optical isomer.

Glutathione is an existing peptide wherein 3 kinds of amino acids of glutamic acid (Glu), cysteine(Cys) and glycine (Gly) are bonded. Specifically, it is a peptide wherein the amino group of cysteine forms a peptide bond with the carboxyl group at the γ-position of glutamic acid, the amino group of glycine forms a peptide bond with the carboxyl group of cysteine, and glutamic acid, cysteine, glycine are sequenced in this order. In the present invention, glutathione encompasses any optical isomer.

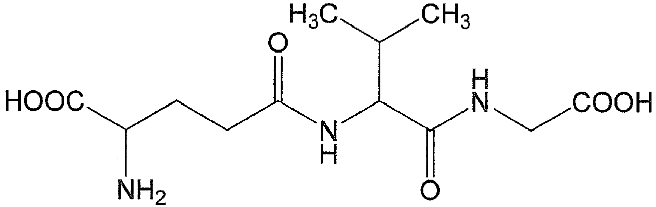

γ-Glu-Val-Gly and glutathione are known peptides and can be obtained by appropriately using a known technique such as (1) chemical synthetic method, (2) synthetic technique by enzymatical reaction and the like. γ-Glu-Val-Gly can also be produced by the method described in WO 2007/055393. In addition, γ-Glu-N-Val can also be produced by the method described in WO 2011/081185, and γ-Glu-N-Val-Gly can also be produced by the method described in WO 2011/081186.

γ-Glu-Val-Gly and glutathione may be salt forms. The salts of γ-Glu-Val-Gly and glutathione are not particularly limited as long as they are edible salts or pharmacologically acceptable salts. For acidic groups such as carboxyl group and the like, for example, salt with alkali metal such as sodium, potassium and the like; salt with alkaline earth metal such as calcium, magnesium and the like; ammonium salt; aluminum salt; zinc salt; salt with organic amine such as triethylamine, ethanolamine, morpholine, pyrrolidine, piperidine, piperazine, dicyclohexylamine and the like; salt with basic amino acid such as arginine, lysine and the like; and the like can be mentioned. For basic group such as amino group, salt with inorganic acid such as hydrochloric acid, sulfuric acid, phosphoric acid, nitric acid, hydrobromic acid and the like; salt with organic carboxylic acid such as acetic acid, citric acid, benzoic acid, maleic acid, fumaric acid, tartaric acid, succinic acid, tannic acid, butyric acid, hibenzoic acid, pamoic acid, enanthic acid, decanoic acid, teoclic acid, salicylic acid, lactic acid, oxalic acid, mandelic acid, malic acid and the like; salt with organic sulfonic acid such as methanesulfonic acid, benzenesulfonic acid, and p-toluenesulfonic

As the kokumi taste-imparting substance used for the composition of the present invention, extracts such as yeast extract, livestock or poultry meat extract and the like, fermented seasoning, fish sauce, protein enzymatic decomposition product, hydrolyzed protein such as amino acid liquid and the like can also be used. In the present specification, the "livestock or poultry meat" means those containing livestock meat (e.g., beef, pork, horse meat, deer meat, sheep meat and goat meat etc.) or poultry meat (e.g., chicken, wild duck meat, ostrich meat, duck meat, sparrow meat etc.).

The composition of the present invention is added to food or drink such that the concentration of the kokumi taste-imparting substance to be added relative to the food or drink is not less than 0.001 weight ppm (preferably not less than 0.005 weight ppm, more preferably not less than 0.01 weight ppm, further preferably not less than 0.1 weight ppm, particularly preferably not less than 2 weight ppm) and not more than 99.9 wt% (preferably not more than 50 wt%, more preferably not more than 40 wt%, further preferably not more than 30 wt%, particularly preferably not more than 20 wt%).

In the present specification, "the concentration to be added to food or drink" means the ratio in weight of what is added to the food or drink (e.g., kokumi taste-imparting substance, 1-octen-3-ol and/or 1-octen-3-one, the composition of the present invention etc.) relative to the whole weight of the food or drink. When the food or drink contains substances similar to those to be added to the food or drink from before the addition, the weight thereof already contained in the food or drink is not included in the weight of substances to be added to the food or drink.

The content of the kokumi taste-imparting substance in the composition of the present invention can be appropriately set such that the concentration of the kokumi taste-imparting substance to be added relative to the food or drink falls within the above-mentioned ranges, which is not less than 0.001 weight ppm (preferably not less than 0.005 weight ppm, more preferably not less than 0.01 weight ppm, further preferably not less than 0.1 weight ppm, particularly preferably not less than 1 weight ppm) and not more than 99.9 wt% (preferably not more than 50 wt%, more preferably not more than 10 wt%, further preferably not more than 1 wt%, particularly preferably not more than 0.1 wt%).

In the present specification, the "content of kokumi taste-imparting substance in the composition of the present invention" is the ratio in weight of kokumi taste-imparting substance contained in the composition of the present invention, relative to the whole weight of the composition of the present invention (including the weight of kokumi taste-imparting substance). The "content" described in other parts of the present specification is also calculated according to a method analogous thereto.

### (1-octen-3-ol and/or 1-octen-3-one)

Either of 1-octen-3-ol and 1-octen-3-one may be used or both may be used in combination. To impart more natural aroma and/or flavor, 1-octen-3-ol is preferably used.

1-Octen-3-ol contains stereoisomers of (R)(-)-form, (S) (+)-form and racemate, and at least one kind of these can be used. (R)(-)-form and racemate are preferable, and racemate is particularly preferably used.

The composition of the present invention is preferably added to food or drink such that the concentration of 1-octen-3-ol and/or 1-octen-3-one to be added relative to the food or drink is not less than 0.000005 weight ppm (preferably not less than 0.0003 weight ppm, more preferably not less than 0.0015 weight ppm, particularly preferably not less than 0.003 weight ppm) and not more than 0.91 weight ppm (preferably not more than 0.02 weight ppm, more preferably not more than 0.015 weight ppm, particularly preferably not more than 0.01 weight ppm).

The content of 1-octen-3-ol and/or 1-octen-3-one in the composition of the present invention can be appropriately set such that the concentration of 1-octen-3-ol and/or 1-octen-3-one to be added relative to food or drink falls within the above-mentioned ranges, which is 0.000005 weight ppm - 99.9 wt% (preferably 0.00032 weight ppm - 31 wt%, more preferably 0.0016 weight ppm - 21 wt%, particularly preferably 0.0032 weight ppm - 15 wt%).

The concentration of the composition of the present invention to be added relative to food or drink can be appropriately set such that the concentration of the kokumi taste-imparting substance, and 1-octen-3-ol and/or 1-octen-3-one to be added relative to the food or drink falls within the above-mentioned ranges, which is generally 0.000001 weight ppm - 99.9 wt% (preferably 0.005 weight ppm - 31 wt%, more preferably 0.01 weight ppm - 21 wt%, particularly preferably 0.1 weight ppm - 15 wt%).

The composition of the present invention further contains lower fatty acids and methional, or octanoic acid and decanoic acid, or lower fatty acids, methional, octanoic acid and decanoic acid, in addition to a kokumi taste-imparting substance and 1-octen-3-ol and/or 1-octen-3-one.

### (lower fatty acids)

As the lower fatty acids, saturated or unsaturated monocarboxylic acid having 3 - 7 (preferably, 4 - 6) carbon atoms is preferable, which may be linear or branched chain. For example, isovaleric acid, propionic acid, butyric acid, isobutyric acid, valeric acid, hexanoic acid (caproic acid), heptanoic acid and the like can be mentioned, isovaleric acid and valeric acid are preferable, and isovaleric acid is particularly preferable.

The composition of the present invention further contains lower fatty acids (preferably isovaleric acid or valeric acid, particularly preferably isovaleric acid) and methional, in addition to a kokumi taste-imparting substance (preferably γ-Glu-Val-Gly, glutathione, γ-Glu-N-Val or γ-Glu-N-Val-Gly, particularly preferably γ-Glu-Val-Gly or glutathione), and 1-octen-3-ol and/or 1-octen-3-one, whereby a still more preferable top aroma and/or flavor can be imparted to food or drink.

When the composition of the present invention further contains lower fatty acids and methional in addition to the kokumi taste-imparting substance, and 1-octen-3-ol and/or 1-octen-3-one, it is preferably added to food or drink such that the concentration of 1-octen-3-ol and/or 1-octen-3-one to be added relative to the food or drink is not less than 0.000005 weight ppm (preferably not less than 0.0003 weight ppm, more preferably not less than 0.0015 weight ppm, particularly preferably not less than 0.003 weight ppm) and not more than 0.91 weight ppm (preferably not more than 0.02 weight ppm, more preferably not more than 0.015 weight ppm, particularly preferably not more than 0.01 weight ppm), the concentration of lower fatty acids to be added relative to the food or drink is not less than 0.001 weight ppm (preferably not less than 0.006 weight ppm, more preferably not less than 0.03 weight ppm, particularly preferably not less than 0.06 weight ppm) and not more than 19.3 weight ppm (preferably not more than 0.4 weight ppm, more preferably not more than 0.3 weight ppm, particularly preferably not more than 0.25 weight ppm), and the concentration of methional to be added relative to the food or drink is not less than 0.00001 weight ppm (preferably not less than 2 weight ppm, more preferably not less than 10.5 weight ppm, particularly preferably not less than 20 weight ppm) and not more than 150 weight ppm (preferably not more than 120 weight ppm, more preferably not more than 95 weight ppm, particularly preferably not more than 70 weight ppm).

When the composition of the present invention further contains lower fatty acids and methional in addition to the kokumi taste-imparting substance, and 1-octen-3-ol and/or 1-octen-3-one, the contents of 1-octen-3-ol and/or 1-octen-3-one, lower fatty acids, and methional in the composition of the present invention can be appropriately set such that the concentrations of 1-octen-3-ol and/or 1-octen-3-one, lower fatty acids, and methional to be added relative to food or drink each fall within the above-mentioned ranges. The content of 1-octen-3-ol and/or 1-octen-3-one is 0.000005 weight ppm - 99.9 wt% (preferably 0.00032 weight ppm - 31 wt%, more preferably 0.0016 weight ppm - 21 wt%, particularly preferably 0.0032 weight ppm - 15 wt%), the content of lower fatty acids is generally 0.001 weight ppm - 99.9 wt% (preferably 0.0068 weight ppm - 31 wt%, more preferably 0.034 weight ppm - 21 wt%, particularly preferably 0.068 weight ppm - 15 wt%), and the content of methional is generally 0.00001 weight ppm - 99.9 wt% (preferably 10 weight ppm - 31 wt%, more preferably 10.5 weight ppm - 21 wt%, particularly preferably 20 weight ppm - 15 wt%).

When the composition of the present invention further contains lower fatty acids and methional in addition to the kokumi taste-imparting substance, and 1-octen-3-ol and/or 1-octen-3-one, the concentration of the composition of the present invention to be added relative to food or drink can be appropriately set such that the concentrations of 1-octen-3-ol and/or 1-octen-3-one, lower fatty acids, and methional to be added relative to the food or drink falls within the above-mentioned ranges, which is generally 0.006 weight ppm - 99.9 wt% (preferably 10 weight ppm - 31 wt%, more preferably 11 weight ppm - 21 wt%, particularly preferably 21 weight ppm - 15 wt%).

The composition of the present invention further contains octanoic acid and decanoic acid, in addition to a kokumi taste-imparting substance (preferably γ-Glu-Val-Gly, glutathione, γ-Glu-N-Val or γ-Glu-N-Val-Gly, particularly preferably γ-Glu-Val-Gly or glutathione), and 1-octen-3-ol and/or 1-octen-3-one, whereby a still more preferable last aroma and/or flavor can be imparted to food or drink.

When the composition of the present invention further contains octanoic acid and decanoic acid in addition to the kokumi taste-imparting substance, and 1-octen-3-ol and/or 1-octen-3-one, it is preferably added to food or drink such that the concentration of 1-octen-3-ol and/or 1-octen-3-one to be added relative to the food or drink is not less than 0.000005 weight ppm (preferably not less than 0.0001 weight ppm, more preferably not less than 0.0007 weight ppm, particularly preferably not less than 0.001 weight ppm) and not more than 0.91 weight ppm (preferably not more than 0.005 weight ppm, more preferably not more than 0.003 weight ppm, particularly preferably not more than 0.0015 weight ppm), the concentration of octanoic acid to be added relative to the food or drink is not less than 0.001 weight ppm (preferably not less than 0.02 weight ppm, more preferably not less than 0.1 weight ppm, particularly preferably not less than 0.15 weight ppm) and not more than 130 weight ppm (preferably not more than 0.7 weight ppm, more preferably not more than 0.5 weight ppm, particularly preferably not more than 0.3 weight ppm), and the concentration of decanoic acid to be added relative to the food or drink is not less than 0.001 weight ppm (preferably not less than 0.06 weight ppm, more preferably not less than 0.3 weight ppm, particularly preferably not less than 0.4 weight ppm) and not more than 390 weight ppm (preferably not more than 2 weight ppm, more preferably not more than 1.5 weight ppm, particularly preferably not more than 0.7 weight ppm).

When the composition of the present invention further contains octanoic acid and decanoic acid, in addition to the kokumi taste-imparting substance, and 1-octen-3-ol and/or 1-octen-3-one, the contents of 1-octen-3-ol and/or 1-octen-3-one, octanoic acid, and decanoic acid in the composition of the present invention can be appropriately set such that the concentrations of 1-octen-3-ol and/or 1-octen-3-one, octanoic acid, and decanoic acid to be added relative to food or drink each fall within the above-mentioned ranges. The content of 1-octen-3-ol and/or 1-octen-3-one is 0.000005 weight ppm - 99.9 wt% (preferably 0.00032 weight ppm - 31 wt%, more preferably 0.0016 weight ppm - 21 wt%, particularly preferably 0.0032 weight ppm - 15 wt%), the content of octanoic acid is generally 0.001 weight ppm - 99.9 wt% (preferably 0.02 weight ppm - 31 wt%, more preferably 0.1 weight ppm - 21 wt%, particularly preferably 0.15 weight ppm - 15 wt%), and the content of decanoic acid is 0.001 weight ppm - 99.9 wt% (preferably 0.06 weight ppm - 31 wt%, more preferably 0.3 weight ppm - 21 wt%, particularly preferably 0.4 weight ppm - 15 wt%).

When the composition of the present invention further contains octanoic acid and decanoic acid in addition to the kokumi taste-imparting substance, and 1-octen-3-ol and/or 1-octen-3-one, the concentration of the composition of the present invention to be added relative to food or drink can be appropriately set such that the concentrations of 1-octen-3-ol and/or 1-octen-3-one, octanoic acid, and decanoic acid to be added relative to the food or drink falls within the above-mentioned ranges, which is generally 0.007 weight ppm - 99.9 wt% (preferably 0.09 weight ppm - 31 wt%, more preferably 0.5 weight ppm - 21 wt%, particularly preferably 1.5 weight ppm - 15 wt%).

The composition of the present invention further contains lower fatty acids (preferably isovaleric acid or valeric acid, particularly preferably isovaleric acid), methional, octanoic acid and decanoic acid, in addition to a kokumi taste-imparting substance (preferably γ-Glu-Val-Gly, glutathione, γ-Glu-N-Val or γ-Glu-N-Val-Gly, particularly preferably γ-Glu-Val-Gly or glutathione), and 1-octen-3-ol and/or 1-octen-3-one, whereby a still more preferable top aroma and/or flavor and a still more preferable last aroma and/or flavor can be imparted to food or drink.

When the composition of the present invention further contains lower fatty acids, methional, octanoic acid and decanoic acid in addition to the kokumi taste-imparting substance, and 1-octen-3-ol and/or 1-octen-3-one, it is preferably added to food or drink such that the concentration of 1-octen-3-ol and/or 1-octen-3-oneone to be added relative to the food or drink is not less than 0.000005 weight ppm (preferably not less than 0.0003 weight ppm, more preferably not less than 0.0015 weight ppm, particularly preferably not less than 0.003 weight ppm) and not more than 0.91 weight ppm (preferably not more than 0.01 weight ppm, more preferably not more than 0.007 weight ppm, particularly preferably not more than 0.005 weight ppm), the concentration of lower fatty acids to be added relative to the food or drink is not less than 0.001 weight ppm (preferably not less than 0.006 weight ppm, more preferably not less than 0.03 weight ppm, particularly preferably not less than 0.05 weight ppm) and not more than 19.3 weight ppm (preferably not more than 0.25 weight ppm, more preferably not more than 0.15 weight ppm, particularly preferably not more than 0.08 weight ppm), the concentration of methional to be added relative to the food or drink is not less than 0.00001 weight ppm (preferably not less than 2 weight ppm, more preferably not less than 10.5 weight ppm, particularly preferably not less than 20 weight ppm) and not more than 150 weight ppm (preferably not more than 70 weight ppm, more preferably not more than 50 weight ppm, particularly preferably not more than 30 weight ppm), the concentration of octanoic acid to be added relative to the food or drink is not less than 0.001 weight ppm (preferably not less than 0.02 weight ppm, more preferably not less than 0.1 weight ppm, particularly preferably not less than 0.15 weight ppm) and not more than 130 weight ppm (preferably not more than 0.7 weight ppm, more preferably not more than 0.5 weight ppm, particularly preferably not more than 0.3 weight ppm), and the concentration of decanoic acid to be added relative to the food or drink is not less than 0.001 weight ppm (preferably not less than 0.06 weight ppm, more preferably not less than 0.3 weight ppm, particularly preferably not less than 0.5 weight ppm) and not more than 390 weight ppm (preferably not more than 2 weight ppm, more preferably not more than 1.5 weight ppm, particularly preferably not more than 0.7 weight ppm).

When the composition of the present invention further contains lower fatty acids, methional, octanoic acid and decanoic acid in addition to the kokumi taste-imparting substance, and 1-octen-3-ol and/or 1-octen-3-one, the contents of 1-octen-3-ol and/or 1-octen-3-one, lower fatty acids, methional, octanoic acid, and decanoic acid in the composition of the present invention can be appropriately set such that the concentrations of 1-octen-3-ol and/or 1-octen-3-one, lower fatty acids, methional, octanoic acid, and decanoic acid to be added relative to food or drink each fall within the above-mentioned ranges. The content of 1-octen-3-ol and/or 1-octen-3-one is 0.000005 weight ppm - 99.9 wt% (preferably 0.00032 weight ppm - 31 wt%, more preferably 0.0016 weight ppm - 21 wt%, particularly preferably 0.0032 weight ppm - 15 wt%), the content of lower fatty acids is generally 0.001 weight ppm - 99.9 wt% (preferably 0.0068 weight ppm - 31 wt%, more preferably 0.034 weight ppm - 21 wt%, particularly preferably 0.068 weight ppm - 15 wt%), the content of methional is generally 0.00001 weight ppm - 99.9 wt% (preferably 10 weight ppm - 31 wt%, more preferably 10.5 weight ppm - 21 wt%, particularly preferably 20 weight ppm - 15 wt%), the content of octanoic acid is generally 0.001 weight ppm - 99.9 wt% (preferably 0.02 weight ppm - 31 wt%, more preferably 0.1 weight ppm - 21 wt%, particularly preferably 0.15 weight ppm - 15 wt%), and the content of decanoic acid is 0.001 weight ppm - 99.9 wt% (preferably 0.06 weight ppm - 31 wt%, more preferably 0.3 weight ppm - 21 wt%, particularly preferably 0.4 weight ppm - 15 wt%) .

When the composition of the present invention further contains lower fatty acids, methional, octanoic acid and decanoic acid in addition to the kokumi taste-imparting substance, and 1-octen-3-ol and/or 1-octen-3-one, the concentration of the composition of the present invention to be added relative to food or drink can be appropriately set such that the concentrations of 1-octen-3-ol and/or 1-octen-3-one, lower fatty acids, methional, octanoic acid, and decanoic acid to be added relative to the food or drink falls within the above-mentioned ranges, which is generally 0.008 weight ppm - 99.9 wt% (preferably 10 weight ppm - 31 wt%, more preferably 11 weight ppm - 21 wt%, particularly preferably 21 weight ppm - 15 wt%) .

The composition of the present invention may contain components other than those mentioned above as long as they do not impair the object of the present invention. Examples of other components include flavors, saccharides, sweeteners, dietary fibers, vitamins, amino acids such as monosodium glutamate (MSG) and the like, nucleic acids such as inosine monophosphate (IMP) and the like, inorganic salts such as sodium chloride and the like, organic acids such as citric acid and the like, creatine, creatinine, maltol, dimethyl trisulfide, cineol and the like.

Each component of the composition of the present invention may be, for example, synthetic products, extracted products and the like as long as they can be used for foods or drinks, and a food material containing a high content of each component may also be used.

While the form of the composition of the present invention is not particularly limited, for example, solid (including powder, granular and the like), liquid (including slurry and the like), gel, paste and the like can be mentioned.

The composition of the present invention may be prepared as a savory seasoning or flavor seasoning by further mixing the composition with one or more kinds (preferably 1 - 100 kinds) of food raw materials (amino acid umami-seasoning (e.g., monosodium glutamate etc.); nucleic acid umami-seasoning (e.g., sodium inosinate etc.); food additive (e.g., citric acid etc.); amino acid (e.g., glycine, alanine etc.); hydrolyzed protein; extract derived from livestock or poultry meat, seafood, vegetable or yeast (e.g., chicken extract, pork extract, beef extract, yeast extract etc.); processed food utilizing a heating browning reaction of amino acid and sugar (aminocarbonyl reaction or Maillard's reaction); processed food using uncooked meat as a raw material; processed food decomposed by enzyme etc.; processed food blended with peptide having kokumi taste-imparting function and the like etc.). In the present specification, the "savory seasoning" is a seasoning containing one or more kinds (preferably 1 - 100 kinds) of food raw materials such as amino acid umami-seasoning (e.g., monosodium glutamate etc.); nucleic acid umami-seasoning (e.g., sodium inosinate etc.); food additive (e.g., citric acid etc.); amino acid (e.g., glycine, alanine etc.); hydrolyzed protein; extract derived from livestock or poultry meat, seafood, vegetable or yeast (e.g., chicken extract, pork extract, beef extract, yeast extract etc.); processed food utilizing a heating browning reaction of amino acid and sugar (aminocarbonyl reaction or Maillard's reaction); processed food using uncooked meat as a raw material; processed food decomposed by enzyme etc.; processed food blended with peptide having kokumi taste-imparting function and the like. As the form of a savory seasoning, liquid, paste, powder, granular and the like can be mentioned. The "flavor seasoning" is a seasoning obtained by adding sugar, sodium chloride and the like to a savory seasoning, which is used for imparting aroma, flavor and taste of a flavor raw material to foods or drinks. As the form of a flavor seasoning, liquid, paste, powder, granular and the like can be mentioned.

When the composition of the present invention is prepared as a savory seasoning, the content of 1-octen-3-ol and/or 1-octen-3-one in the savory seasoning is generally 0.01 weight ppm - 0.182 wt% (preferably 0.1 weight ppm - 0.1 wt%, more preferably 1 weight ppm - 100 weight ppm, particularly preferably 2 weight ppm - 20 weight ppm).

When the composition of the present invention is further added with lower fatty acids and methional in addition to the kokumi taste-imparting substance, and 1-octen-3-ol and/or 1-octen-3-one, the content of 1-octen-3-ol and/or 1-octen-3-one in the savory seasoning is generally 0.01 weight ppm - 0.182 wt% (preferably 0.6 weight ppm - 40 weight ppm, more preferably 3 weight ppm - 30 weight ppm, particularly preferably 6 weight ppm - 20 weight ppm), the content of lower fatty acids is generally 2 weight ppm - 3.86 wt% (preferably 12 weight ppm - 800 weight ppm, more preferably 60 weight ppm - 600 weight ppm, particularly preferably 120 weight ppm - 500 weight ppm), and the content of methional is generally 0.02 weight ppm - 30 wt% (preferably 0.4 wt% - 24 wt%, more preferably 2.1 wt% - 19 wt%, particularly preferably 4 wt% - 14 wt%).

When the composition of the present invention is further added with octanoic acid and decanoic acid in addition to the kokumi taste-imparting substance, and 1-octen-3-ol and/or 1-octen-3-one, the content of 1-octen-3-ol and/or 1-octen-3-one in the savory seasoning is generally 0.01 weight ppm - 0.182 wt% (preferably 0.2 weight ppm - 10 weight ppm, more preferably 1.4 weight ppm - 6 weight ppm, particularly preferably 2 weight ppm - 3 weight ppm), the content of octanoic acid is generally 2 weight ppm - 26 wt% (preferably 40 weight ppm - 0.14 wt%, more preferably 200 weight ppm - 0.1 wt%, particularly preferably 300 weight ppm - 600 weight ppm), and the content of decanoic acid is generally 2 weight ppm - 78 wt% (preferably 120 weight ppm - 0.4 wt%, more preferably 600 weight ppm - 0.3 wt%, particularly preferably 800 weight ppm - 0.14 wt%).

When the composition of the present invention is further added with lower fatty acids, methional, octanoic acid and decanoic acid in addition to the kokumi taste-imparting substance, and 1-octen-3-ol and/or 1-octen-3-one, the content of 1-octen-3-ol and/or 1-octen-3-one in the savory seasoning is generally 0.01 weight ppm - 0.182 wt% (preferably 0.6 weight ppm - 20 weight ppm, more preferably 3 weight ppm - 14 weight ppm, particularly preferably 6 weight ppm - 10 weight ppm), the content of lower fatty acids is generally 2 weight ppm - 3.86 wt% (preferably 12 weight ppm - 500 weight ppm, more preferably 60 weight ppm - 300 weight ppm, particularly preferably 100 weight ppm - 160 weight ppm), the content of methional is generally 0.02 weight ppm - 30 wt% (preferably 0.4 wt% - 14 wt%, more preferably 2.1 wt% - 10 wt%, particularly preferably 4 wt% - 6 wt%), the content of octanoic acid is generally 2 weight ppm - 26 wt% (preferably 40 weight ppm - 0.14 wt%, more preferably 200 weight ppm - 0.1 wt%, particularly preferably 300 weight ppm - 600 weight ppm), and the content of decanoic acid is generally 2 weight ppm - 78 wt% (preferably 120 weight ppm - 0.4 wt%, more preferably 600 weight ppm - 0.3 wt%, particularly preferably 0.1 wt% - 0.14 wt%).

When the composition of the present invention is prepared as a flavor seasoning, the content of 1-octen-3-ol and/or 1-octen-3-one in the flavor seasoning is generally 0.00033 weight ppm - 60.67 weight ppm (preferably 0.0033 weight ppm - 33.33 weight ppm, more preferably 0.033 weight ppm - 3.33 weight ppm, particularly preferably 0.067 weight ppm - 0.33 weight ppm).

When the composition of the present invention is further added with lower fatty acids and methional in addition to the kokumi taste-imparting substance, and 1-octen-3-ol and/or 1-octen-3-one, the content of 1-octen-3-ol and/or 1-octen-3-one in the flavor seasoning is generally 0.00033 weight ppm - 60.67 weight ppm (preferably 0.02 weight ppm - 1.33 weight ppm, more preferably 0.1 weight ppm - 1 weight ppm, particularly preferably 0.2 weight ppm - 0.67 weight ppm), the content of lower fatty acids is generally 0.067 weight ppm - 0.13 wt% (preferably 0.4 weight ppm - 26.67 weight ppm, more preferably 2 weight ppm - 20 weight ppm, particularly preferably 4 weight ppm - 16.67 weight ppm), and the content of methional is generally 0.00067 weight ppm - 1 wt% (preferably 133.33 weight ppm - 0.8 wt%, more preferably 700 weight ppm - 0.63 wt%, particularly preferably 0.13 wt% - 0.47 wt%).

When the composition of the present invention is further added octanoic acid and decanoic acid in addition to the kokumi taste-imparting substance, and 1-octen-3-ol and/or 1-octen-3-one, the content of 1-octen-3-ol and/or 1-octen-3-one in the flavor seasoning is generally 0.00033 weight ppm - 60.67 wt% (preferably 0.0067 weight ppm - 0.33 weight ppm, more preferably 0.047 weight ppm - 0.2 weight ppm, particularly preferably 0.067 weight ppm - 0.1 weight ppm), the content of octanoic acid is generally 0.067 weight ppm - 0.87 wt% (preferably 1.33 weight ppm - 48.67 weight ppm, more preferably 6.67 weight ppm - 33.33 weight ppm, particularly preferably 10 weight ppm - 20 weight ppm), and the content of decanoic acid is generally 0.067 weight ppm - 2.6 wt% (preferably 4 weight ppm - 133.33 weight ppm, more preferably 20 weight ppm - 100 weight ppm, particularly preferably 26.67 weight ppm - 48.67 weight ppm).

When the composition of the present invention is further added with lower fatty acids, methional, octanoic acid and decanoic acid in addition to the kokumi taste-imparting substance, and 1-octen-3-ol and/or 1-octen-3-one, the content of 1-octen-3-ol and/or 1-octen-3-one in the flavor seasoning is generally 0.00033 weight ppm - 60.67 wt% (preferably 0.02 weight ppm - 0.67 weight ppm, more preferably 0.1 weight ppm - 0.47 weight ppm, particularly preferably 0.2 weight ppm - 0.33 weight ppm), the content of lower fatty acids is generally 0.067 weight ppm - 0.13 wt% (preferably 0.4 weight ppm - 16.67 weight ppm, more preferably 2 weight ppm - 10 weight ppm, particularly preferably 3.33 weight ppm - 5.33 weight ppm), the content of methional is generally 0.00067 weight ppm - 1 wt% (preferably 133.33 weight ppm - 0.47 wt%, more preferably 700 weight ppm - 0.33 wt%, particularly preferably 0.13 wt% - 0.2 wt%), the content of octanoic acid is generally 0.067 weight ppm - 0.87 wt% (preferably 1.33 weight ppm - 46.67 weight ppm, more preferably 6.67 weight ppm - 33.33 weight ppm, particularly preferably 10 weight ppm - 20 weight ppm), and the content of decanoic acid is generally 0.067 weight ppm - 2.6 wt% (preferably 4 weight ppm - 133.33 weight ppm, more preferably 20 weight ppm - 100 weight ppm, particularly preferably 33.33 weight ppm - 46.67 weight ppm).

When the composition of the present invention is prepared as a savory seasoning, the concentration thereof to be added relative to food or drink is generally 0.0001 - 1 wt% (preferably 0.0005 - 0.5 wt%, more preferably 0.01 - 0.1 wt%).

When the composition of the present invention is prepared as a flavor seasoning, the concentration thereof to be added relative to food or drink is generally 0.01 - 20 wt% (preferably 0.05 - 15 wt%, more preferably 0.1 - 10 wt%).

The production method of the composition of the present invention may be a known method. For example, the composition can be produced by mixing raw materials by a method known per se.

While the food or drink to be added with the composition of the present invention are not particularly limited, examples of the food or drink to be added with the composition of the present invention include a food or drink material derived from livestock or poultry meat or seafood such as chicken extract, pork extract, beef extract, dried bonito and the like; a food or drink obtained by processing a food or drink material derived from livestock or poultry meat or seafood (including meat, bone and the like) as a raw material such as chicken consomme, chicken carcass soup, pork bone soup, oyster sauce, lobster bisque, imitation crab sticks, ham, sausage and the like; milk and dairy products such as raw milk, cows milk, special milk, raw goat milk, sterilized goat milk, raw sheep milk, composition-adjusted milk, low-fat milk, non-fat milk, processed milk, cream, fresh cream, butter, butter oil, cheese (e.g., natural cheese, processed cheese, cottage cheese etc.), condensed whey, ice creams (e.g., ice cream, ice milk, lactic ice etc.), condensed milk, condensed skim milk, evaporated milk, evaporated skim milk, sweetened condensed milk, sweetened condensed skim milk, powdered whole milk, skimmed milk powder, cream powder, whey powder, protein condensed whey powder, butter milk powder, sweetened milk powder, formulated milk powder, fermented milk, lactic acid bacteria drinks, milk drinks, white sauce, yogurt and the like; seasonings such as soy sauce (e.g., koikuchi soy sauce, usukuchi soy sauce, tamari soy sauce, saishikomi soy sauce, white soy sauce, fish sauce, noodle soup, soup for Japanese nabe etc.), miso (e.g., red miso, white miso, Sendai miso, Hatcho miso, barley miso, rise miso, miso soup, Tian mian jiang, Gochujang etc.), sauce (e.g., Worcestershire sauce, demiglace sauce, tomato sauce etc.), dressing (e.g., French dressing, Italian dressing, Caesar dressing etc.), flavor seasoning (e.g., chicken flavor seasoning, pork flavor seasoning, beef flavor seasoning etc.) and the like; potherb such as garlic, onion, ginger, welsh onion, Chinese chive, Japanese parsley, Japanese ginger, celery, perilla, Japanese honewort, Japanese horseradish and the like and food or drink obtained by processing potherb as raw materials (e.g., soup etc.); mushroom soup, corn soup, egg soup, curry, stew, coffee (e.g., milk coffee, drip coffee etc.) and the like. The "processing" of the "food or drink obtained by processing a food or drink material derived from livestock or poultry meat or seafood" is a concept including production, cooking and the like.

When the composition of the present invention further contains lower fatty acids and methional, in addition to the kokumi taste-imparting substance, and 1-octen-3-ol and/or 1-octen-3-one, preferable examples of the food or drink to be added with the composition of the present invention include a food or drink material derived from livestock or poultry meat or seafood such as chicken extract, pork extract, beef extract, dried bonito and the like; a food or drink obtained by processing a food or drink material derived from livestock or poultry meat or seafood (including meat, bone and the like) as a raw material such as chicken consomme, chicken carcass soup, pork bone soup, oyster sauce, lobster bisque, imitation crab sticks, ham, sausage and the like; seasonings such as soy sauce (e.g., koikuchi soy sauce, usukuchi soy sauce, tamari soy sauce, saishikomi soy sauce, white soy sauce, fish sauce, noodle soup, soup for Japanese nabe etc.), miso (e.g., red miso, white miso, Sendai miso, Hatcho miso, barley miso, rise miso, miso soup, Tian mian jiang, Gochujang etc.), sauce (e.g., Worcestershire sauce, demiglace sauce, tomato sauce etc.), dressing (e.g., French dressing, Italian dressing, Caesar dressing etc.), flavor seasoning (e.g., chicken flavor seasoning, pork flavor seasoning, beef flavor seasoning etc.) and the like; potherb such as garlic, onion, ginger, welsh onion, Chinese chive, Japanese parsley, Japanese ginger, celery, perilla, Japanese honewort, Japanese horseradish and the like and food and drink obtained by processing potherb as raw materials (e.g., soup etc.); mushroom soup, corn soup, egg soup, curry, stew and the like.

When the composition of the present invention further contains octanoic acid and decanoic acid, in addition to the kokumi taste-imparting substance, and 1-octen-3-ol and/or 1-octen-3-one, preferable examples of the food or drink to be added with the composition of the present invention include a food or drink material derived from livestock or poultry meat or seafood such as chicken extract, pork extract, beef extract, dried bonito and the like; a food or drink obtained by processing a food or drink material derived from livestock or poultry meat (including meat, bone and the like) as a raw material such as chicken consomme, chicken carcass soup, pork bone soup, ham, sausage and the like; milk and dairy products such as raw milk, cows milk, special milk, raw goat milk, sterilized goat milk, raw sheep milk, composition-adjusted milk, low-fat milk, non-fat milk, processed milk, cream, fresh cream, butter, butter oil, cheese (e.g., natural cheese, processed cheese, cottage cheese etc.), condensed whey, ice creams (e.g., ice cream, ice milk, lactic ice etc.), condensed milk, condensed skim milk, evaporated milk, evaporated skim milk, sweetened condensed milk, sweetened condensed skim milk, powdered whole milk, skimmed milk powder, cream powder, whey powder, protein condensed whey powder, butter milk powder, sweetened milk powder, formulated milk powder, fermented milk, lactic acid bacteria drinks, milk drinks, white sauce, yogurt and the like; seasonings such as flavor seasoning (e.g., chicken flavor seasoning, pork flavor seasoning, beef flavor seasoning etc.) and the like; potherb such as garlic, onion, ginger, welsh onion, Chinese chive, Japanese parsley, Japanese ginger, celery, perilla, Japanese honewort, Japanese horseradish and the like and food or drink obtained by processing potherb as raw materials (e.g., soup etc.); mushroom soup, corn soup, egg soup, curry, stew, coffee (e.g., milk coffee, drip coffee etc.) and the like.

When the composition of the present invention further contains lower fatty acids, methional, octanoic acid and decanoic acid, in addition to the kokumi taste-imparting substance, and 1-octen-3-ol and/or 1-octen-3-one, preferable examples of the food or drink to be added with the composition of the present invention include a food or drink material derived from livestock or poultry meat or seafood such as chicken extract, pork extract, beef extract, dried bonito and the like; a food or drink obtained by processing a food or drink material derived from livestock or poultry meat or seafood (including meat, bone and the like) as a raw material such as chicken consomme, chicken carcass soup, pork bone soup, oyster sauce, lobster bisque, imitation crab sticks, ham, sausage and the like, seasonings such as flavor seasoning (e.g., chicken flavor seasoning, pork flavor seasoning, beef flavor seasoning etc.) and the like; potherb such as garlic, onion, ginger, welsh onion, Chinese chive, Japanese parsley, Japanese ginger, celery, perilla, Japanese honewort, Japanese horseradish and the like and food and drink obtained by processing potherb as raw materials (e.g., soup etc.); mushroom soup, corn soup, egg soup, curry, stew and the like.

The timing of addition of the composition of the present invention to food or drink is not particularly limited. For example, they may be added together with other raw materials when the food or drink are cooked and produced, may be added after completion of the food or drink, or may be added to the food or drink immediately before eating and/or during eating.

### [food or drink of the present invention]

The food or drink of the present invention is produced by a production method including a step of adding a kokumi taste-imparting substance, and 1-octen-3-ol and/or 1-octen-3-one.

As the kokumi taste-imparting substance to be used for the food or drink of the present invention, those similar to the kokumi taste-imparting substance used for the above-mentioned composition of the present invention can be used, and preferable embodiment thereof is the same as that of the composition of the present invention.

The concentration of the kokumi taste-imparting substance to be added relative to food or drink is not less than 0.001 weight ppm (preferably not less than 0.005 weight ppm, more preferably not less than 0.01 weight ppm, further preferably not less than 0.1 weight ppm, particularly preferably not less than 2 weight ppm) and not more than 99.9 wt% (preferably not more than 50 wt%, more preferably not more than 40 wt%, further preferably not more than 30 wt%, particularly preferably not more than 20 wt%).

As 1-octen-3-ol and/or 1-octen-3-one to be used for the food or drink of the present invention, those similar to 1-octen-3-ol and/or 1-octen-3-one used for the above-mentioned composition of the present invention can be used, and preferable embodiment thereof is the same as that of the composition of the present invention.

In the food or drink of the present invention, the concentration of 1-octen-3-ol and/or 1-octen-3-one to be added relative to food or drink is not less than 0.000005 weight ppm (preferably not less than 0.0003 weight ppm, more preferably not less than 0.0015 weight ppm, particularly preferably not less than 0.003 weight ppm) and not more than 0.91 weight ppm (preferably not more than 0.02 weight ppm, more preferably not more than 0.015 weight ppm, particularly preferably not more than 0.01 weight ppm).

The food or drink of the present invention may be produced by a production method further including, in addition to a step of adding a kokumi taste-imparting substance and 1-octen-3-ol and/or 1-octen-3-one, a step of adding at least one kind selected from the group consisting of lower fatty acids, methional, octanoic acid and decanoic acid. For example, the food or drink of the present invention may be produced by a production method further including, in addition to a step of adding a kokumi taste-imparting substance and 1-octen-3-ol and/or 1-octen-3-one, (1) a step of adding lower fatty acids and methional, or (2) a step of adding octanoic acid and decanoic acid, or (3) a step of adding lower fatty acids, methional, octanoic acid and decanoic acid.

As the lower fatty acids to be used for the food or drink of the present invention, those similar to the lower fatty acids used for the above-mentioned composition of the present invention can be used, and preferable embodiment thereof is the same as that of the composition of the present invention.

Since the food or drink of the present invention is further added with lower fatty acids and methional in addition to a kokumi taste-imparting substance, and 1-octen-3-ol and/or 1-octen-3-one, a still more preferable top aroma and/or flavor is imparted.

When the food or drink of the present invention is produced by a production method further including, in addition to a step of adding a kokumi taste-imparting substance and 1-octen-3-ol and/or 1-octen-3-one, a step of adding lower fatty acids and methional, it is preferable that the concentration of 1-octen-3-ol and/or 1-octen-3-one to be added relative to food or drink be not less than 0.000005 weight ppm (preferably not less than 0.0003 weight ppm, more preferably not less than 0.0015 weight ppm, particularly preferably not less than 0.003 weight ppm) and not more than 0.91 weight ppm (preferably not more than 0.02 weight ppm, more preferably not more than 0.015 weight ppm, particularly preferably not more than 0.01 weight ppm), the concentration of lower fatty acids to be added relative to food or drink be not less than 0.001 weight ppm (preferably not less than 0.006 weight ppm, more preferably not less than 0.03 weight ppm, particularly preferably not less than 0.06 weight ppm) and not more than 19.3 weight ppm (preferably not more than 0.4 weight ppm, more preferably not more than 0.3 weight ppm, particularly preferably not more than 0.25 weight ppm), and the concentration of methional to be added relative to food or drink be not less than 0.00001 weight ppm (preferably not less than 2 weight ppm, more preferably not less than 10.5 weight ppm, particularly preferably not less than 20 weight ppm) and not more than 150 weight ppm (preferably not more than 120 weight ppm, more preferably not more than 95 weight ppm, particularly preferably not more than 70 weight ppm).

Since the food or drink of the present invention is further added with octanoic acid and decanoic acid in addition to a kokumi taste-imparting substance, and 1-octen-3-ol and/or 1-octen-3-one, a still more preferable last aroma and/or flavor is imparted.

When the food or drink of the present invention is produced by a production method further including, in addition to a step of adding a kokumi taste-imparting substance and 1-octen-3-ol and/or 1-octen-3-one, a step of adding octanoic acid and decanoic acid, it is preferable that the concentration of 1-octen-3-ol and/or 1-octen-3-one to be added relative to food or drink be not less than 0.000005 weight ppm (preferably not less than 0.0001 weight ppm, more preferably not less than 0.0007 weight ppm, particularly preferably not less than 0.001 weight ppm) and not more than 0.91 weight ppm (preferably not more than 0.005 weight ppm, more preferably not more than 0.003 weight ppm, particularly preferably not more than 0.0015 weight ppm), the concentration of octanoic acid to be added relative to food or drink be not less than 0.001 weight ppm (preferably not less than 0.02 weight ppm, more preferably not less than 0.1 weight ppm, particularly preferably not less than 0.15 weight ppm) and not more than 130 weight ppm (preferably not more than 0.7 weight ppm, more preferably not more than 0.5 weight ppm, particularly preferably not more than 0.3 weight ppm), and the concentration of decanoic acid to be added relative to food or drink be not less than 0.001 weight ppm (preferably not less than 0.06 weight ppm, more preferably not less than 0.3 weight ppm, particularly preferably not less than 0.4 weight ppm) and not more than 390 weight ppm (preferably not more than 2 weight ppm, more preferably not more than 1.5 weight ppm, particularly preferably not more than 0.7 weight ppm).

Since the food or drink of the present invention is further added with lower fatty acids, methional, octanoic acid and decanoic acid in addition to a kokumi taste-imparting substance, and 1-octen-3-ol and/or 1-octen-3-one, a still more preferable top aroma and/or flavor and a still more preferable last aroma and/or flavor are imparted.

When the food or drink of the present invention is produced by a production method further including, in addition to a step of adding a kokumi taste-imparting substance and 1-octen-3-ol and/or 1-octen-3-one, a step of adding lower fatty acids, methional, octanoic acid and decanoic acid, it is preferable that the concentration of 1-octen-3-ol and/or 1-octen-3-one to be added relative to food or drink be not less than 0.00005 weight ppm (preferably not less than 0.0003 weight ppm, more preferably not less than 0.0015 weight ppm, particularly preferably not less than 0.003 weight ppm) and not more than 0.91 weight ppm (preferably not more than 0.01 weight ppm, more preferably not more than 0.007 weight ppm, particularly preferably not more than 0.005 weight ppm), the concentration of lower fatty acids to be added relative to food or drink be not less than 0.001 weight ppm (preferably not less than 0.006 weight ppm, more preferably not less than 0.03 weight ppm, particularly preferably not less than 0.05 weight ppm) and not more than 19.3 weight ppm (preferably not more than 0.25 weight ppm, more preferably not more than 0.15 weight ppm, particularly preferably not more than 0.08 weight ppm), the concentration of methional to be added relative to food or drink be not less than 0.00001 weight ppm (preferably not less than 2 weight ppm, more preferably not less than 10.5 weight ppm, particularly preferably not less than 20 weight ppm) and not more than 150 weight ppm (preferably not more than 70 weight ppm, more preferably not more than 50 weight ppm, particularly preferably not more than 30 weight ppm), the concentration of octanoic acid to be added relative to food or drink be not less than 0.001 weight ppm (preferably not less than 0.02 weight ppm, more preferably not less than 0.1 weight ppm, particularly preferably not less than 0.15 weight ppm) and not more than 130 weight ppm (preferably not more than 0.7 weight ppm, more preferably not more than 0.5 weight ppm, particularly preferably not more than 0.3 weight ppm), and the concentration of decanoic acid to be added relative to food or drink be not less than 0.001 weight ppm (preferably not less than 0.06 weight ppm, more preferably not less than 0.3 weight ppm, particularly preferably not less than 0.5 weight ppm) and not more than 390 weight ppm (preferably not more than 2 weight ppm, more preferably not more than 1.5 weight ppm, particularly preferably not more than 0.7 weight ppm).

The food or drink of the present invention may comprise adding components other than the above as long as they do not impair the object of the present invention. Examples of other components include flavors, saccharides, sweeteners, dietary fibers, vitamins, amino acids such as monosodium glutamate (MSG) and the like, nucleic acids such as inosine monophosphate (IMP) and the like, inorganic salts such as sodium chloride and the like, organic acids such as citric acid and the like, creatine, creatinine, maltol, dimethyl trisulfide, cineol and the like.

Each component to be added to the food or drink of the present invention may be, for example, synthetic products, extracted products and the like as long as they can be used for foods or drinks, and a food material containing a high content of each component may also be used.

While the food or drink of the present invention is not particularly limited, for example, those similar to the foods or drinks preferably to be added with the composition of the present invention can be mentioned.

When the food or drink of the present invention is produced by a production method further including, in addition to a step of adding a kokumi taste-imparting substance and 1-octen-3-ol and/or 1-octen-3-one, a step of adding lower fatty acids and methional, examples of the food or drink of the present invention include those similar to the above-mentioned foods or drinks to be preferably added with the composition of the present invention, which further contains lower fatty acids and methional, in addition to a kokumi taste-imparting substance, and 1-octen-3-ol and/or 1-octen-3-one.

When the food or drink of the present invention is produced by a production method further including, in addition to a step of adding a kokumi taste-imparting substance and 1-octen-3-ol and/or 1-octen-3-one, a step of adding octanoic acid and decanoic acid, examples of the food or drink of the present invention include those similar to the above-mentioned foods or drinks to be preferably added with the composition of the present invention, which further contains octanoic acid and decanoic acid, in addition to a kokumi taste-imparting substance, and 1-octen-3-ol and/or 1-octen-3-one.

When the food or drink of the present invention is produced by a production method further including, in addition to a step of adding a kokumi taste-imparting substance and 1-octen-3-ol and/or 1-octen-3-one, a step of adding lower fatty acids, methional, octanoic acid and decanoic acid, examples of the food or drink of the present invention include those similar to the above-mentioned foods or drinks to be preferably added with the composition of the present invention, which further contains lower fatty acids, methional, octanoic acid and decanoic acid, in addition to a kokumi taste-imparting substance, and 1-octen-3-ol and/or 1-octen-3-one.

The food or drink of the present invention can be produced by using raw materials similar to those of known foods or drinks and by a known production method, except that a step of adding a kokumi taste-imparting substance, 1-octen-3-ol and/or 1-octen-3-one and, when desired, a step of adding at least one kind selected from the group consisting of lower fatty acids, methional, octanoic acid and decanoic acid.

A method for adding a kokumi taste-imparting substance, 1-octen-3-ol and/or 1-octen-3-one, lower fatty acids, methional, octanoic acid and decanoic acid to the food or drink is not particularly limited and, for example, each compound may be individually added or a food material containing at least one kind of kokumi taste-imparting substance, 1-octen-3-ol and/or 1-octen-3-one, lower fatty acids, methional, octanoic acid and decanoic acid may be added. Alternatively, the above-mentioned composition of the present invention may be added.

The form of each compound of a kokumi taste-imparting substance, 1-octen-3-ol and/or 1-octen-3-one, lower fatty acids, methional, octanoic acid and decanoic acid or a food material containing these when added to the food or drink of the present invention is not particularly limited and, for example, dried powder, paste, solution and the like can be mentioned.

The timing of addition of kokumi taste-imparting substance, 1-octen-3-ol and/or 1-octen-3-one, lower fatty acids, methional, octanoic acid and decanoic acid to the food or drink of the present invention is not particularly limited. For example, they may be added together with other raw materials when the food or drink are cooked or produced, may be added after completion of the food or drink, or may be added to the food or drink immediately before eating and/or during eating.

The present invention is explained in more detail in the following by referring to Examples.

### Examples

*Kokumi* taste-imparting substance used in Examples 1 - 39 is γ-Glu-Val-Gly (manufactured by Ajinomoto Co., Inc.).

*Kokumi* taste-imparting substance used in Examples 40 - 68 is glutathione (manufactured by Kohjin Co., Ltd.).

*Kokumi* taste-imparting substance used in Examples 69 - 76 is γ-Glu-N-Val-Gly (manufactured by Ajinomoto Co., Inc.).

*Kokumi* taste-imparting substance used in Examples 77 - 84 is γ-Glu-N-Val (manufactured by Ajinomoto Co., Inc.).

In addition, 1-octen-3-ol, 1-octen-3-one, isovaleric acid, methional, octanoic acid and decanoic acid used in Examples were all manufactured by Sigma-Aldrich Japan K.K. As 1-octen-3-ol, racemate was used.

The foods and drinks used in the Examples are shown in Table 1-1, Table 1-2 and Table 1-3.

**[Table 1-1]**

| product field | | product or menu | trade name | sales company |
|---|---|---|---|---|
| livestock or poultry meat | chicken | chicken consomme | "Knorr (registered trade mark)" CHICKEN CONSOMME | Ajinomoto Co., Inc. |
| | | chicken carcass soup | MARUTORIGARA SOUP | Ajinomoto Co., Inc. |
| | pork | pork extract | CHUKAYO HUMICHOMIRYO CHUKAAJI PAITAN | Ajinomoto Co., Inc. |
| | | pork bone soup | CHUKAAJI HUEITAN PAITAN | Ajinomoto Co., Inc. |
| | beef | beef extract | "Knorr (registered trade mark)" BEEF CONSOMME | Ajinomoto Co., Inc. |
| seafood | dried bonito | bonito stock | CHUBODAIKO HONDUKURI ICHIBANDASHI KATSUO | Ajinomoto Co., Inc. |
| | oyster | oyster sauce | "Cook Do (registered trade mark)" OYSTER SAUCE | Ajinomoto Co., Inc. |
| | shrimp | lobster bisque | LOBSTER BISQUE | Shimizu Shokuhin Kaisva Ltd. |
| | crab | imitation crab sticks | HOGUREYASUI SHOKKAN KANIHUMI KAMABOKO | Fushimikamaboko Co., Ltd. |
| milk and dairy products | cows milk | cows milk | MORINAGA NO OISHII MILK | Morinaga Milk Industry Co., Ltd. |
| | | white sauce | Heinz WHITE SAUCE | Heinz Japan Ltd. |
| | | calpis | CALPIS WATER | Calpis Co., Ltd. |
| | | ice cream | MEIJI ESSEL SUPER CUP CHO VANILLA | Meiji Dairies Corporation |
| | yogurt | yogurt | MORINAGA BIHIDAS BB536 PLAIN YOGURT | Morinaga Milk Industry Co., Ltd. |
| | cheese | cheese fondue | CHEESE FONDUE | MEGMILK SNOW BRAND Co., Ltd. |
| | butter | butter | YUKIJIRUSHI HOKKAIDO BUTTER | MEGMILK SNOW BRAND Co., Ltd. |
| seasoning | soy sauce | soy sauce | SENDO NO ITTEKI TOKUSENSHOYU | YAMASA CORPORATION |
| | | fish sauce | YUIRU NAM PLA | YOUKI FOOD Co., Ltd. |
| | | noodle soup | KATSUOBUSHI NINBEN NO TSUYU NO MOTO | NINBEN Co., Ltd. |
| | | soup for Japanese nabe | SHIOTYANKO NABETSUYU | DAISHO Co., Ltd. |

**[Table 1-2]**

| product field | | product or menu | trade name | sales company |
|---|---|---|---|---|
| seasoning | miso | miso soup | JUNSEI KOJIMISO | MARUSAN-AI Co., Ltd. |
| | | Tian mian jiang | "Cook Do (registered trade mark)" TIAN MIAN JIANG (CHUKA AMAMISO) | Ajinomoto Co., Inc. |
| | | Gochujang | "Cook Do (registered trade mark)" Korea! GOCHUJANG (KANKOKU TOGARASHIMISO) | Ajinomoto Co., Inc. |
| | sauce | Worcestershire sauce | WORCESTERSHIRE SAUCE | BULL-DOG SAUCE Co., Ltd. |
| | | demiglace sauce | Heinz DEMIGLACE SAUCE | Heinz Japan Ltd. |
| | dressing | French | KEWPIE FRENCH DRESSING (SHIRO) | Kewpie Corporation |
| | | Italian | KEWPIE ITALIAN DRESSING | Kewpie Corporation |
| | tomato | tomato sauce | KAGOME KIHON NO tomato sauce | KAGOME Co., Ltd. |
| | flavor seasoning | chicken | chicken flavor seasoning | - |
| | | pork | pork flavor seasoning | - |
| | | beef | beef flavor seasoning | - |
| others | mushroom | mushroom soup | "VONO" | Aj inomoto Co., Inc. |
| | corn | corn soup | TSUBUTAPPURI CORN CREAM POTAGE | Ajinomoto Co., Inc. |
| | egg | egg soup | "Knorr (registered trade mark)" HUNWARI TAMAGO SOUP | Ajinomoto Co., Inc. |
| potherb | onion | onion soup | Campbell Soup ONION GRATIN SOUP | Shimizu Shokuhin Kaisya Ltd. |
| | garlic | grated garlic | SURIOROSHI NINNIKU | YOUKI FOOD Co., Ltd. |

**[Table 1-3]**

| product field | | product or menu | trade name | sales company |
|---|---|---|---|---|
| coffee | milk coffee | milk coffee | YUKIJIRUSHI COFFEE | MEGMILK SNOW BRAND Co., Ltd. |
| | drip coffee | drip coffee | CHOTTO ZEITAKU NA KOHITEN YUTAKA NA KOKU NO SPECIAL BLEND | AJINOMOTO GENERAL FOODS, Inc. |

Of the foods and drinks shown in Table 1-1, Table 1-2 and Table 1-3, flavor seasonings (chicken flavor seasoning, pork flavor seasoning, beef flavor seasoning) were each mixed as shown in Tables 2 - 4 below, hot water was added to give as 1.5 wt% hot water aqueous solution.

**[Table 2]**

| chicken flavor seasoning | |
|---|---|
| raw material | mixing ratio (wt%) |
| sodium chloride | 60 |
| monosodium glutamate | 15 |
| chicken extract | 5 |
| others | 20 |
| total | 100 |

**[Table 3]**

| pork flavor seasoning | |
|---|---|
| raw material | mixing ratio (wt%) |
| sodium chloride | 30 |
| monosodium glutamate | 30 |
| pork extract | 17 |
| others | 23 |
| total | 100 |

**[Table 4]**

| beef flavor seasoning | |
|---|---|
| raw material | mixing ratio (wt%) |
| sodium chloride | 70 |
| monosodium glutamate | 10 |
| beef extract | 4 |
| others | 16 |
| total | 100 |

Of the foods and drinks shown in Table 1-1, Table 1-2 and Table 1-3, except for the flavor seasonings, a commercially available product may be directly used or prepared according to the given preparation method described on the package and the like.

### (Preparation of Examples 1 - 4 (References only))

A part of the foods and drinks shown in Table 1-1, Table 1-2 and Table 1-3 was each measured by 100 ml, and kokumi taste-imparting substance and 1-octen-3-ol or 1-octen-3-one were added to each of the measured foods and drinks to the addition concentrations shown in Table 5.

**[Table 5]**

| name of component | Ex. 1* | Ex. 2* | Ex. 3* | Ex. 4* |
|---|---|---|---|---|
| 1-octen-3-ol | 0.0032 | 0.0032 | 0 | 0 |
| 1-octen-3-one | 0 | 0 | 0.0016 | 0.0016 |
| kokumi taste-imparting substance | 2 | 20 | 2 | 20 |

| | | | | |
|---|---|---|---|---|
| *Reference only unit: weight ppm | | | | |

### (Evaluation of Examples 1 - 4 (References only))

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor, and the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 6.

**[Table 6]**

| product field | | product or menu | Example (Reference only) | | | |
|---|---|---|---|---|---|---|
| | | | 1 | 2 | 3 | 4 |
| livestock or poultry meat | chicken | chicken consomme | ○ | ○ | ○ | ○ |
| | | chicken carcass soup | ○ | ○ | ○ | ○ |
| | pork | pork extract | ○ | ○ | ○ | ○ |
| | | pork bone soup | ○ | ○ | ○ | ○ |
| | beef | beef extract | ○ | ○ | ○ | ○ |
| seafood | dried bonito | bonito stock | ○ | ○ | ○ | ○ |
| | oyster | oyster sauce | ○ | ○ | ○ | ○ |
| | shrimp | lobster bisque | ○ | ○ | ○ | ○ |
| | crab | imitation crab sticks | ○ | ○ | ○ | ○ |
| milk and dairy products | cows milk | white sauce | ○ | ○ | ○ | ○ |
| | | calpis | ○ | ○ | ○ | ○ |
| | | ice cream | ○ | ○ | ○ | ○ |
| | yogurt | yogurt | ○ | ○ | ○ | ○ |
| | cheese | cheese fondue | ○ | ○ | ○ | ○ |
| | butter | butter | ○ | ○ | ○ | ○ |
| seasoning | soy sauce | soy sauce | ○ | ○ | ○ | ○ |
| | | fish sauce | ○ | ○ | ○ | ○ |
| | | noodle soup | ○ | ○ | ○ | ○ |
| | | soup for Japanese nabe | ○ | ○ | ○ | ○ |
| | miso | miso soup | ○ | ○ | ○ | ○ |
| | | Tian mian jiang | ○ | ○ | ○ | ○ |
| | | Gochujang | ○ | ○ | ○ | ○ |
| | sauce | Worcestershire sauce | ○ | ○ | ○ | ○ |
| | | demiglace sauce | ○ | ○ | ○ | ○ |
| | dressing | French | ○ | ○ | ○ | ○ |
| | | Italian | ○ | ○ | ○ | ○ |
| | tomato | tomato sauce | ○ | ○ | ○ | ○ |
| | flavor seasoning | chicken | ○ | ○ | ○ | ○ |
| | | pork | ○ | ○ | ○ | ○ |
| | | beef | ○ | ○ | ○ | ○ |
| others | mushroom | mushroom soup | ○ | ○ | ○ | ○ |
| | corn | corn soup | ○ | ○ | ○ | ○ |
| | egg | egg soup | ○ | ○ | ○ | ○ |
| potherb | onion | onion soup | ○ | ○ | ○ | ○ |
| | garlic | grated garlic | ○ | ○ | ○ | ○ |
| coffee | milk coffee | milk coffee | ○ | ○ | ○ | ○ |
| | drip coffee | drip coffee | ○ | ○ | ○ | ○ |

In any of Examples 1 - 4, it was confirmed that the top aroma and/or flavor, as well as the last aroma and/or flavor were sufficiently imparted to all foods and drinks added with them, and the quality of the foods or drinks was improved by the impartment of these aromas and/or flavors.

### (Preparation of Examples 5 - 14)

A part of the foods and drinks shown in Table 1-1, Table 1-2 and Table 1-3 was each measured by 100 ml, and kokumi taste-imparting substance, 1-octen-3-ol, decanoic acid and octanoic acid were added to each of the measured foods and drinks to the addition concentrations shown in Table 7-1 and Table 7-2.

**[Table 7-1]**

| name of component | Ex. 5 | Ex. 6 | Ex. 7 | Ex. 8 | Ex. 9 |
|---|---|---|---|---|---|
| 1-octen-3-ol | 0.000149 | 0.000149 | 0.000745 | 0.000745 | 0.00149 |
| octanoic acid | 0.0213 | 0.0213 | 0.1065 | 0.1065 | 0.213 |
| decanoic acid | 0.0638 | 0.0638 | 0.319 | 0.319 | 0.638 |
| kokumi taste-imparting substance | 2 | 10 | 2 | 10 | 2 |

| | | | | | |
|---|---|---|---|---|---|
| unit: weight ppm | | | | | |

**[Table 7-2]**

| name of component | Ex. 10 | Ex. 11 | Ex. 12 | Ex. 13 | Ex. 14 |
|---|---|---|---|---|---|
| 1-octen-3-ol | 0.00149 | 0.00298 | 0.00298 | 0.00447 | 0.00447 |
| octanoic acid | 0.213 | 0.426 | 0.426 | 0.639 | 0.639 |
| decanoic acid | 0.638 | 1.276 | 1.276 | 1.914 | 1.914 |
| kokumi taste-imparting substance | 20 | 2 | 20 | 2 | 20 |

| | | | | | |
|---|---|---|---|---|---|
| unit: weight ppm | | | | | |

### (Evaluation of Examples 5 - 14)

Two to six expert panelists ate each food and drink and evaluated by comparison with the control according to the following criteria. As the control, respective foods and drinks added with a kokumi taste-imparting substance alone were used. The "expected effect" in the following criteria means that the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 8-1 and Table 8-2.

**[Table 8-1]**

| product field | | product or menu | Example | | | | |
|---|---|---|---|---|---|---|---|
| | | | 5 | 6 | 7 | 8 | 9 |
| livestock or poultry meat | chicken | chicken consomme | Δ | Δ | ○ | ○ | ○ |
| | | chicken carcass soup | Δ | Δ | ○ | ○ | ○ |
| | pork | pork extract | Δ | Δ | ○ | ○ | ○ |
| | | pork bone soup | Δ | Δ | ○ | ○ | ○ |
| | beef | beef extract | Δ | Δ | ○ | ○ | ○ |
| seafood | dried bonito | bonito stock | Δ | Δ | Δ | Δ | Δ |
| | oyster | oyster sauce | Δ | Δ | Δ | Δ | Δ |
| | shrimp | lobster bisque | Δ | Δ | Δ | Δ | Δ |
| | crab | imitation crab sticks | Δ | Δ | Δ | Δ | Δ |
| milk and dairy products | cows milk | cows milk | ○ | ○ | ⊙ | ⊙ | ⊙ |
| | | white sauce | ○ | ○ | ⊙ | ⊙ | ⊙ |
| | | calpis | ○ | ○ | ○ | ○ | ○ |
| | | ice cream | ○ | ○ | ⊙ | ⊙ | ⊙ |
| | yogurt | yogurt | ○ | ○ | ⊙ | ⊙ | ⊙ |
| | cheese | cheese fondue | ○ | ○ | ⊙ | ⊙ | ⊙ |
| | butter | butter | ○ | Δ | ⊙ | ○ | ⊙ |
| seasoning | soy sauce | soy sauce | Δ | Δ | ○ | ○ | ○ |
| | | fish sauce | Δ | Δ | ○ | ○ | ○ |
| | | noodle soup | Δ | Δ | ○ | ○ | ○ |
| | | soupfor Japanese nabe | Δ | Δ | ○ | ○ | ○ |
| | miso | miso soup | Δ | Δ | ○ | ○ | ○ |
| | | Tian mian jiang | Δ | Δ | ○ | ○ | ○ |
| | | Gochujang | Δ | Δ | ○ | ○ | ○ |
| | sauce | Worcestershire sauce | Δ | Δ | ○ | ○ | ○ |
| | | demiglace sauce | Δ | Δ | ○ | ○ | ○ |
| | dressing | French | Δ | Δ | ○ | ○ | ○ |
| | | Italian | Δ | Δ | ○ | ○ | ○ |
| | tomato | tomato sauce | Δ | Δ | ○ | ○ | ○ |
| | flavor seasoning | chicken | ○ | ○ | ⊙ | ⊙ | ⊙ |
| | | pork | ○ | ○ | ⊙ | ⊙ | ⊙ |
| | | beef | ○ | ○ | ⊙ | ⊙ | ⊙ |
| other | mushroom | mushroom soup | Δ | Δ | ○ | ○ | ○ |
| | corn | corn soup | Δ | Δ | ○ | ○ | ○ |
| | egg | egg soup | Δ | Δ | ○ | ○ | ○ |
| potherb | onion | onion soup | Δ | Δ | ○ | ○ | ○ |
| | garlic | grated garlic | Δ | Δ | ○ | ○ | ○ |
| coffee | milk coffee | milk coffee | ○ | ○ | ○ | ○ | ⊙ |
| | drip coffee | drip coffee | Δ | Δ | Δ | Δ | Δ |

**[Table 8-2]**

| product field | | product or menu | Example | | | | |
|---|---|---|---|---|---|---|---|
| | | | 10 | 11 | 12 | 13 | 14 |
| livestock or poultry meat | chicken | chicken consomme | ○ | ○ | ○ | ○ | ○ |
| | | chicken carcass soup | ○ | ○ | ○ | ○ | ○ |
| | pork | pork extract | ○ | ○ | ○ | ○ | ○ |
| | | pork bone soup | ○ | ○ | ○ | ○ | ○ |
| | beef | beef extract | ○ | ○ | ○ | ○ | ○ |
| seafood | dried bonito | bonito stock | Δ | Δ | Δ | Δ | Δ |
| | oyster | oyster sauce | Δ | Δ | Δ | Δ | Δ |
| | shrimp | lobster bisque | Δ | Δ | Δ | Δ | Δ |
| | crab | imitation crab sticks | Δ | Δ | Δ | Δ | Δ |
| milk and dairy products | cows milk | cows milk | ⊙ | ⊙ | ⊙ | Δ | Δ |
| | | white sauce | ⊙ | ⊙ | ⊙ | Δ | Δ |
| | | calpis | ○ | Δ | Δ | Δ | Δ |
| | | ice cream | ⊙ | ⊙ | ⊙ | Δ | Δ |
| | yogurt | yogurt | ⊙ | ⊙ | ⊙ | Δ | Δ |
| | cheese | cheese fondue | ⊙ | ⊙ | ⊙ | Δ | Δ |
| | butter | butter | ○ | ⊙ | ○ | Δ | Δ |
| seasoning | soy sauce | soy sauce | ○ | Δ | Δ | Δ | Δ |
| | | fish sauce | ○ | Δ | Δ | Δ | Δ |
| | | noodle soup | ○ | Δ | Δ | Δ | Δ |
| | | soup for Japanese nabe | ○ | Δ | Δ | Δ | Δ |
| | miso | miso soup | ○ | Δ | Δ | Δ | Δ |
| | | Tian mian jiang | ○ | Δ | Δ | Δ | Δ |
| | | Gochujang | ○ | Δ | Δ | Δ | Δ |
| | sauce | Worcestershire sauce | ○ | Δ | Δ | Δ | Δ |
| | | demiglace sauce | ○ | Δ | Δ | Δ | Δ |
| | dressing | French | ○ | Δ | Δ | Δ | Δ |
| | | Italian | ○ | Δ | Δ | Δ | Δ |
| | tomato | tomato sauce | ○ | Δ | Δ | Δ | Δ |
| | flavor seasoning | chicken | ⊙ | ⊙ | ⊙ | ○ | ○ |
| | | pork | ⊙ | ⊙ | ⊙ | ○ | ○ |
| | | beef | ⊙ | ⊙ | ⊙ | ○ | ○ |
| others | mushroom | mushroom | ○ | ○ | ○ | ○ | ○ |
| | corn | corn soup | ○ | ○ | ○ | ○ | ○ |
| | egg | egg soup | ○ | ○ | ○ | ○ | ○ |
| potherb | onion | onion soup | ○ | ○ | ○ | ○ | ○ |
| | garlic | grated garlic | ○ | ○ | ○ | ○ | ○ |
| coffee | milk coffee | milk coffee | ⊙ | ⊙ | ⊙ | ⊙ | ⊙ |
| | drip coffee | drip coffee | Δ | Δ | Δ | Δ | Δ |

In any of Examples 5 - 14, it was confirmed that the last aroma and/or flavor were sufficiently imparted to almost foods and drinks added with them, and the quality of the foods or drinks was improved by the impartment of the aromas and/or flavors. Among these, an extremely high effect on many foods and drinks was confirmed in Examples 7 - 12.

### (Preparation of Examples 15 - 29)

A part of the foods and drinks shown in Table 1-1, Table 1-2 and Table 1-3 was each measured by 100 ml, and kokumi taste-imparting substance, 1-octen-3-ol, isovaleric acid and methional were added to each of the measured foods and drinks to the addition concentrations shown in Table 9-1, Table 9-2 and Table 9-3.

**[Table 9-1]**

| name of component | Ex. 15 | Ex. 16 | Ex. 17 | Ex. 18 | Ex. 19 |
|---|---|---|---|---|---|
| 1-octen-3-ol | 0.00032 | 0.00032 | 0.0016 | 0.0016 | 0.0032 |
| isovaleric acid | 0.0068 | 0.0068 | 0.034 | 0.034 | 0.068 |
| methional | 2.273 | 2.273 | 11.365 | 11.365 | 22.73 |
| kokumi taste-imparting substance | 2 | 10 | 2 | 10 | 2 |

| | | | | | |
|---|---|---|---|---|---|
| unit: weight ppm | | | | | |

**[Table 9-2]**

| name of component | Ex. 20 | Ex. 21 | Ex. 22 | Ex. 23 | Ex. 24 |
|---|---|---|---|---|---|
| 1-octen-3-ol | 0.0032 | 0.0032 | 0.0064 | 0.0064 | 0.0096 |
| isovaleric acid | 0.068 | 0.068 | 0.136 | 0.136 | 0.204 |
| methional | 22.73 | 22.73 | 45.46 | 45.46 | 68.19 |
| kokumi taste-imparting substance | 10 | 20 | 2 | 20 | 2 |

| | | | | | |
|---|---|---|---|---|---|
| unit: weight ppm | | | | | |

**[Table 9-3]**

| name of component | Ex. 25 | Ex. 26 | Ex. 27 | Ex. 28 | Ex. 29 |
|---|---|---|---|---|---|
| 1-octen-3-ol | 0.0096 | 0.0128 | 0.0128 | 0.016 | 0.016 |
| isovaleric acid | 0.204 | 0.272 | 0.272 | 0.34 | 0.34 |
| methional | 68.19 | 90.92 | 90.92 | 113.65 | 113.65 |
| kokumi taste-imparting substance | 20 | 2 | 20 | 2 | 20 |

| | | | | | |
|---|---|---|---|---|---|
| unit: weight ppm | | | | | |

### (Evaluation of Examples 15 - 29)

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 10-1, Table 10-2 and Table 10-3.

**[Table 10-1]**

| product field | | product or menu | Example | | | | |
|---|---|---|---|---|---|---|---|
| | | | 15 | 16 | 17 | 18 | 19 |
| livestock or poultry meat | chicken | chicken consomme | Δ | Δ | ○ | ○ | ○ |
| | | chicken carcass soup | Δ | Δ | ○ | ○ | ○ |
| | pork | pork extract | Δ | Δ | ○ | ○ | ○ |
| | | pork bone soup | Δ | Δ | ○ | ○ | ○ |
| | beef | beef extract | Δ | Δ | ○ | ○ | ○ |
| seafood | dried bonito | bonito stock | ○ | ○ | ⊙ | ⊙ | ⊙ |
| | oyster | oyster sauce | ○ | ○ | ⊙ | ⊙ | ⊙ |
| | shrimp | lobster bisque | ○ | ○ | ⊙ | ⊙ | ⊙ |
| | crab | imitation crab sticks | ○ | ○ | ⊙ | ⊙ | ⊙ |
| milk and dairy products | cows milk | white sauce | Δ | Δ | ○ | ○ | ○ |
| | | calpis | Δ | Δ | Δ | Δ | Δ |
| | | ice cream | Δ | Δ | Δ | Δ | Δ |
| | yogurt | yogurt | Δ | Δ | Δ | Δ | Δ |
| | cheese | cheese fondue | Δ | Δ | ○ | ○ | ○ |
| | butter | butter | Δ | Δ | ○ | ○ | ○ |
| seasoning | soy sauce | soy sauce | ○ | ○ | ⊙ | ⊙ | ⊙ |
| | | fish sauce | ○ | ○ | ⊙ | ⊙ | ⊙ |
| | | noodle soup | ○ | ○ | ⊙ | ⊙ | ⊙ |
| | | soup for Japanese nabe | ○ | ○ | ⊙ | ⊙ | ⊙ |
| | miso | miso soup | ○ | ○ | ⊙ | ⊙ | ⊙ |
| | | Tian mian jiang | Δ | Δ | ○ | ○ | ○ |
| | | Gochujang | Δ | Δ | ○ | ○ | ○ |
| | sauce | Worcestershire sauce | ○ | ○ | ⊙ | ⊙ | ⊙ |
| | | demiglace sauce | Δ | Δ | ○ | ○ | ○ |
| | dressing | French | Δ | Δ | ○ | ○ | ○ |
| | | Italian | Δ | Δ | ○ | ○ | ○ |
| | tomato | tomato sauce | Δ | Δ | ○ | ○ | ○ |
| | flavor seasoning | chicken | ○ | ○ | ⊙ | ⊙ | ⊙ |
| | | pork | ○ | ○ | ⊙ | ⊙ | ⊙ |
| | | beef | ○ | ○ | ⊙ | ⊙ | ⊙ |
| others | mushroom | mushroom soup | Δ | Δ | ○ | ○ | ○ |
| | corn | corn soup | Δ | Δ | ○ | ○ | ○ |
| | egg | egg soup | Δ | Δ | ○ | ○ | ○ |
| potherb | onion | onion soup | Δ | Δ | ○ | ○ | ○ |
| | garlic | grated garlic | Δ | Δ | ○ | ○ | ○ |
| coffee | milk coffee | milk coffee | Δ | Δ | Δ | Δ | Δ |
| | drip coffee | drip coffee | Δ | Δ | Δ | Δ | Δ |

**[Table 10-2]**

| product field | | product or menu | Example | | | | |
|---|---|---|---|---|---|---|---|
| | | | 20 | 21 | 22 | 23 | 24 |
| livestock or poultry meat | chicken | chicken consomme | ○ | ○ | ○ | ○ | ○ |
| | | chicken carcass soup | ○ | ○ | ○ | ○ | ○ |
| | pork | pork extract | ○ | ○ | ○ | ○ | ○ |
| | | pork bone soup | ○ | ○ | ○ | ○ | ○ |
| | beef | beef extract | ○ | ○ | ○ | ○ | ○ |
| seafood | dried bonito | bonito stock | ⊙ | ⊙ | ⊙ | ⊙ | ⊙ |
| | oyster | oyster sauce | ⊙ | ⊙ | ⊙ | ⊙ | ⊙ |
| | shrimp | lobster bisque | ⊙ | ⊙ | ⊙ | ⊙ | ⊙ |
| | crab | imitation crab sticks | ⊙ | ⊙ | ⊙ | ⊙ | ⊙ |
| milk and dairy products | cows milk | white sauce | ○ | ○ | ○ | ○ | ○ |
| | | calpis | Δ | Δ | Δ | Δ | Δ |
| | | ice cream | Δ | Δ | Δ | Δ | Δ |
| | yogurt | yogurt | Δ | Δ | Δ | Δ | Δ |
| | cheese | cheese fondue | ○ | ○ | ○ | ○ | ○ |
| | butter | butter | ○ | ○ | Δ | Δ | Δ |
| seasoning | soy sauce | soy sauce | ⊙ | ⊙ | ⊙ | ⊙ | ⊙ |
| | | fish sauce | ⊙ | ⊙ | ⊙ | ⊙ | ⊙ |
| | | noodle soup | ⊙ | ⊙ | ⊙ | ⊙ | ⊙ |
| | | soup for Japanese nabe | ⊙ | ⊙ | ⊙ | ⊙ | ⊙ |
| | miso | miso soup | ⊙ | ⊙ | ⊙ | ⊙ | ⊙ |
| | | Tian mian jiang | ○ | ○ | ○ | ○ | ○ |
| | | Gochujang | ○ | ○ | ○ | ○ | ○ |
| | sauce | Worcestershire sauce | ⊙ | ⊙ | ⊙ | ⊙ | ⊙ |
| | | demiglace sauce | ○ | ○ | ○ | ○ | ○ |
| | dressing | French | ○ | ○ | ○ | ○ | ○ |
| | | Italian | ○ | ○ | ○ | ○ | ○ |
| | tomato | tomato sauce | ○ | ○ | ○ | ○ | ○ |
| | flavor seasoning | chicken | ⊙ | ⊙ | ⊙ | ⊙ | ⊙ |
| | | pork | ⊙ | ⊙ | ⊙ | ⊙ | ⊙ |
| | | beef | ⊙ | ⊙ | ⊙ | ⊙ | ⊙ |
| others | mushroom | mushroom | ○ | ○ | ○ | ○ | ○ |
| | corn | corn soup | ○ | ○ | ○ | ○ | ○ |
| | egg | egg soup | ○ | ○ | ○ | ○ | ○ |
| potherb | onion | onion soup | ○ | ○ | ○ | ○ | ○ |
| | garlic | grated garlic | ○ | ○ | ○ | ○ | ○ |
| coffee | milk coffee | milk coffee | Δ | Δ | Δ | Δ | Δ |
| | drip coffee | drip coffee | Δ | Δ | Δ | Δ | Δ |

**[Table 10-3]**

| product field | | product or menu | Example | | | | |
|---|---|---|---|---|---|---|---|
| | | | 25 | 26 | 27 | 28 | 29 |
| livestock or poultry meat | chicken | chicken consomme | ○ | Δ | Δ | Δ | Δ |
| | | chicken carcass soup | ○ | Δ | Δ | Δ | Δ |
| | pork | pork extract | ○ | Δ | Δ | Δ | Δ |
| | | pork bone soup | ○ | Δ | Δ | Δ | Δ |
| | beef | beef extract | ○ | Δ | Δ | Δ | Δ |
| seafood | dried bonito | bonito stock | ⊙ | ○ | ○ | ○ | ○ |
| | oyster | oyster sauce | ⊙ | ○ | ○ | ○ | ○ |
| | shrimp | lobster bisque | ⊙ | ○ | ○ | ○ | ○ |
| | crab | imitation crab sticks | ⊙ | ○ | ○ | ○ | ○ |
| milk and dairy products | cows milk | white sauce | ○ | Δ | Δ | Δ | Δ |
| | | calpis | Δ | Δ | Δ | Δ | Δ |
| | | ice cream | Δ | Δ | Δ | Δ | Δ |
| | yogurt | yogurt | Δ | Δ | Δ | Δ | Δ |
| | cheese | cheese fondue | ○ | Δ | Δ | Δ | Δ |
| | butter | butter | Δ | Δ | Δ | Δ | Δ |
| seasoning | soy sauce | soy sauce | ⊙ | ○ | ○ | ○ | ○ |
| | | fish sauce | ⊙ | ○ | ○ | ○ | ○ |
| | | noodle soup | ⊙ | ○ | ○ | ○ | ○ |
| | | soup for Japanese nabe | ⊙ | ○ | ○ | ○ | ○ |
| | miso | miso soup | ⊙ | ○ | ○ | ○ | ○ |
| | | Tian mian jiang | ○ | Δ | Δ | Δ | Δ |
| | | Gochujang | ○ | Δ | Δ | Δ | Δ |
| | sauce | Worcestershire sauce | ⊙ | ○ | ○ | ○ | ○ |
| | | demiglace sauce | ○ | Δ | Δ | Δ | Δ |
| | dressing | French | ○ | Δ | Δ | Δ | Δ |
| | | Italian | ○ | Δ | Δ | Δ | Δ |
| | tomato | tomato sauce | ○ | Δ | Δ | Δ | Δ |
| | flavor seasoning | chicken | ⊙ | ○ | ○ | ○ | ○ |
| | | pork | ⊙ | ○ | ○ | ○ | ○ |
| | | beef | ⊙ | ○ | ○ | ○ | ○ |
| others | mushroom | mushroom | ○ | Δ | Δ | Δ | Δ |
| | corn | corn soup | ○ | Δ | Δ | Δ | Δ |
| | egg | egg soup | ○ | Δ | Δ | Δ | Δ |
| potherb | onion | onion soup | ○ | Δ | Δ | Δ | Δ |
| | garlic | grated garlic | ○ | Δ | Δ | Δ | Δ |
| coffee | milk | milk coffee | Δ | Δ | Δ | Δ | Δ |
| | drip | drip coffee | Δ | Δ | Δ | Δ | Δ |

In any of Examples 15 - 29, it was confirmed that the top aroma and/or flavor were/was sufficiently imparted to almost foods and drinks added with them, and the quality of the foods or drinks was improved by the impartment of these aromas and/or flavors. Among these, an extremely high effect on many foods and drinks was confirmed in Examples 17 - 25.

### (Preparation of Examples 30 - 39)

A part of the flavor seasonings shown in Table 1-2 was each measured by 100 ml, and kokumi taste-imparting substance, 1-octen-3-ol, isovaleric acid, methional, octanoic acid and decanoic acid were added to each of the measured flavor seasonings to the addition concentrations shown in Table 11-1 and Table 11-2.

**[Table 11-1]**

| name of component | Ex. 30 | Ex. 31 | Ex. 32 | Ex. 33 | Ex. 34 |
|---|---|---|---|---|---|
| 1-octen-3-ol | 0.00032 | 0.00032 | 0.0016 | 0.0016 | 0.0032 |
| isovaleric acid | 0.0068 | 0.0068 | 0.034 | 0.034 | 0.068 |
| methional | 2.273 | 2.273 | 11.365 | 11.365 | 22.73 |
| octanoic acid | 0.0213 | 0.0213 | 0.1065 | 0.1065 | 0.213 |
| decanoic acid | 0.0638 | 0.0638 | 0.319 | 0.319 | 0.638 |
| kokumi taste-imparting substance | 2 | 10 | 2 | 10 | 2 |

| | | | | | |
|---|---|---|---|---|---|
| unit: weight ppm | | | | | |

**[Table 11-2]**

| name of component | Ex. 35 | Ex. 36 | Ex. 37 | Ex. 38 | Ex. 39 |
|---|---|---|---|---|---|
| 1-octen-3-ol | 0.0032 | 0.0032 | 0.0064 | 0.0064 | 0.0096 |
| isovaleric acid | 0.068 | 0.068 | 0.136 | 0.136 | 0.204 |
| methional | 22.73 | 22.73 | 45.46 | 45.46 | 68.19 |
| octanoic acid | 0.213 | 0.426 | 0.426 | 0.639 | 0.639 |
| decanoic acid | 0.638 | 1.276 | 1.276 | 1.914 | 1.914 |
| kokumi taste-imparting substance | 10 | 20 | 2 | 20 | 2 |

| | | | | | |
|---|---|---|---|---|---|
| unit: weight ppm | | | | | |

### (Evaluation of Examples 30 - 39)

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor, and the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 12-1 and Table 12-2.

**[Table 12-1]**

| product field | | product or menu | Example | | | | |
|---|---|---|---|---|---|---|---|
| | | | 30 | 31 | 32 | 33 | 34 |
| seasoning | flavor seasoning | chicken | Δ | Δ | ○ | ○ | ⊙ |
| | | pork | Δ | Δ | ○ | ○ | ⊙ |
| | | beef | Δ | Δ | ○ | ○ | ⊙ |

**[Table 12-2]**

| product field | | product or menu | Example | | | | |
|---|---|---|---|---|---|---|---|
| | | | 35 | 36 | 37 | 38 | 39 |
| seasoning | flavor seasoning | chicken | ⊙ | ○ | ○ | ○ | Δ |
| | | pork | ⊙ | ○ | ○ | ○ | Δ |
| | | beef | ⊙ | ○ | ○ | ○ | Δ |

In any of Examples 30 - 39, it was confirmed that the top aroma and/or flavor, as well as the last aroma and/or flavor were imparted to all foods and drinks added with them, and the quality of the foods or drinks was improved by the impartment of these aromas and/or flavors. Among these, a high effect was confirmed in Examples 32 - 38 and an extremely high effect was particularly confirmed in Examples 34 and 35.

### (Preparation of Examples 40 - 54)

A part of the foods and drinks shown in Table 1-1 and Table 1-2 (chicken consomme, noodle soup, grated garlic) was each measured by 100 ml, and kokumi taste-imparting substance, 1-octen-3-ol, isovaleric acid and methional were added to each of the measured foods and drinks to the addition concentrations shown in Table 13-1, Table 13-2 and Table 13-3.

**[Table 13-1]**

| name of component | Ex. 40 | Ex. 41 | Ex. 42 | Ex. 43 | Ex. 44 |
|---|---|---|---|---|---|
| 1-octen-3-ol | 0.00032 | 0.00032 | 0.0016 | 0.0016 | 0.0032 |
| isovaleric acid | 0.0068 | 0.0068 | 0.034 | 0.034 | 0.068 |
| methional | 2.273 | 2.273 | 11.365 | 11.365 | 22.73 |
| kokumi taste-imparting substance | 20 | 200 | 20 | 200 | 20 |

| | | | | | |
|---|---|---|---|---|---|
| unit: weight ppm | | | | | |

**[Table 13-2]**

| name of component | Ex. 45 | Ex. 46 | Ex. 47 | Ex. 48 | Ex. 49 |
|---|---|---|---|---|---|
| 1-octen-3-ol | 0.0032 | 0.0032 | 0.0064 | 0.0064 | 0.0096 |
| isovaleric acid | 0.068 | 0.068 | 0.136 | 0.136 | 0.204 |
| methional | 22.73 | 22.73 | 45.46 | 45.46 | 68.19 |
| kokumi taste-imparting substance | 100 | 200 | 20 | 200 | 20 |

| | | | | | |
|---|---|---|---|---|---|
| unit: weight ppm | | | | | |

**[Table 13-3]**

| name of component | Ex. 50 | Ex. 51 | Ex. 52 | Ex. 53 | Ex. 54 |
|---|---|---|---|---|---|
| 1-octen-3-ol | 0.0096 | 0.0128 | 0.0128 | 0.016 | 0.016 |
| isovaleric acid | 0.204 | 0.272 | 0.272 | 0.34 | 0.34 |
| methional | 68.19 | 90.92 | 90.92 | 113.65 | 113.65 |
| kokumi taste-imparting substance | 200 | 20 | 200 | 20 | 200 |

| | | | | | |
|---|---|---|---|---|---|
| unit: weight ppm | | | | | |

### (Evaluation of Examples 40 - 54)

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 14-1, Table 14-2 and Table 14-3.

**[Table 14-1]**

| product field | | product or menu | Example | | | | |
|---|---|---|---|---|---|---|---|
| | | | 40 | 41 | 42 | 43 | 44 |
| livestock or poultry meat | chicken | chicken consomme | Δ | Δ | ○ | ○ | ○ |
| seasoning | soy sauce | noodle soup | Δ | Δ | ○ | ○ | ○ |
| potherb | garlic | grated garlic | Δ | Δ | ○ | ○ | ○ |

**[Table 14-2]**

| product field | | product or menu | Example | | | | |
|---|---|---|---|---|---|---|---|
| | | | 45 | 46 | 47 | 48 | 49 |
| livestock or poultry meat | chicken | chicken consomme | ○ | ○ | ○ | ○ | ○ |
| seasoning | soy sauce | noodle soup | ○ | ○ | ○ | ○ | ○ |
| potherb | garlic | grated garlic | ○ | ○ | ○ | ○ | ○ |

**[Table 14-3]**

| product field | | product or menu | Example | | | | |
|---|---|---|---|---|---|---|---|
| | | | 50 | 51 | 52 | 53 | 54 |
| livestock or poultry meat | chicken | chicken consomme | ○ | Δ | Δ | Δ | Δ |
| seasoning | soy sauce | noodle soup | ○ | Δ | Δ | Δ | Δ |
| potherb | garlic | grated garlic | ○ | Δ | Δ | Δ | Δ |

In any of Examples 40 - 54, it was confirmed that the top aroma and/or flavor were/was sufficiently imparted to all foods and drinks added with them, and the quality of the foods or drinks was improved by the impartment of the aromas and/or flavors. Among these, a high effect was confirmed in Examples 42 - 50.

### (Preparation of Examples 55 - 64)

A part of the foods and drinks shown in Table 1-1 and Table 1-2 (chicken consomme, cows milk, grated garlic) was each measured by 100 ml, and kokumi taste-imparting substance, 1-octen-3-ol, decanoic acid and octanoic acid were added to each of the measured foods and drinks to the addition concentrations shown in Table 15-1 and Table 15-2.

**[Table 15-1]**

| name of component | Ex. 55 | Ex. 56 | Ex. 57 | Ex. 58 | Ex. 59 |
|---|---|---|---|---|---|
| 1-octen-3-ol | 0.00014 9 | 0.00014 9 | 0.00074 5 | 0.00074 5 | 0.00149 |
| octanoic acid | 0.0213 | 0.0213 | 0.1065 | 0.1065 | 0.213 |
| decanoic acid | 0.0638 | 0.0638 | 0.319 | 0.319 | 0.638 |
| kokumi taste-imparting substance | 20 | 200 | 20 | 200 | 20 |

| | | | | | |
|---|---|---|---|---|---|
| unit: weight ppm | | | | | |

**[Table 15-2]**

| name of component | Ex. 60 | Ex. 61 | Ex. 62 | Ex. 63 | Ex. 64 |
|---|---|---|---|---|---|
| 1-octen-3-ol | 0.00149 | 0.00298 | 0.00298 | 0.00447 | 0.00447 |
| octanoic acid | 0.213 | 0.426 | 0.426 | 0.639 | 0.639 |
| decanoic acid | 0.638 | 1.276 | 1.276 | 1.914 | 1.914 |
| kokumi taste-imparting substance | 200 | 20 | 200 | 20 | 200 |

| | | | | | |
|---|---|---|---|---|---|
| unit: weight ppm | | | | | |

### (Evaluation of Examples 55 - 64)

Two to six expert panelists ate each food and drink and evaluated by comparison with the control according to the following criteria. As the control, respective foods and drinks added with a kokumi taste-imparting substance alone were used. The "expected effect" in the following criteria means that the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 16-1 and Table 16-2.

**[Table 16-1]**

| product field | | product or menu | Example | | | | |
|---|---|---|---|---|---|---|---|
| | | | 55 | 56 | 57 | 58 | 59 |
| livestock or poultry meat | chicken | chicken consomme | Δ | Δ | ○ | ○ | ○ |
| milk | cows milk | cows milk | Δ | Δ | ○ | ○ | ○ |
| potherb | garlic | grated garlic | Δ | Δ | ○ | ○ | ○ |

**[Table 16-2]**

| product field | | product or menu | Example | | | | |
|---|---|---|---|---|---|---|---|
| | | | 60 | 61 | 62 | 63 | 64 |
| livestock or poultry meat | chicken | chicken consomme | ○ | ○ | ○ | ○ | ○ |
| milk | cows milk | cows milk | ○ | ○ | ○ | Δ | Δ |
| potherb | garlic | grated garlic | ○ | ○ | ○ | ○ | ○ |

In any of Examples 55 - 64, it was confirmed that the last aroma and/or flavor were/was imparted to all foods and drinks added with them, and the quality of the foods or drinks was improved by the impartment of the aromas and/or flavors. Among these, a high effect was confirmed in Examples 57 - 64.

### (Preparation of Examples 65 - 68 (References only))

A part of the foods and drinks shown in Table 1-2 (1.5 wt% aqueous solution of chicken flavor seasoning) was measured by 100 ml, and kokumi taste-imparting substance and 1-octen-3-ol or 1-octen-3-one were added to the measured food and drink to the addition concentrations shown in Table 17.

**[Table 17]**

| name of component | Ex. 65* | Ex. 66* | Ex. 67* | Ex. 68* |
|---|---|---|---|---|
| 1-octen-3-ol | 0.0032 | 0.0032 | 0 | 0 |
| 1-octen-3-one | 0 | 0 | 0.0016 | 0.0016 |
| kokumi taste-imparting substance | 20 | 200 | 20 | 200 |

| | | | | |
|---|---|---|---|---|
| * Reference only unit: weight ppm | | | | |

### (Evaluation of Examples 65 - 68)

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor, and the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 18.

**[Table 18]**

| product field | | product or menu | Example (Reference only) | | | |
|---|---|---|---|---|---|---|
| | | | 65 | 66 | 67 | 68 |
| seasoning | flavor seasoning | chicken | ○ | ○ | ○ | ○ |

In any of Examples 65 - 68, it was confirmed that the top aroma and/or flavor, as well as the last aroma and/or flavor were sufficiently imparted to foods and drinks added with them, and the quality of the foods or drinks was improved by the impartment of these aromas and/or flavors.

### (Preparation of Examples 69 - 72 (References only))

A part of the foods and drinks shown in Table 1-2 (1.5 wt% aqueous solution of chicken flavor seasoning) was measured by 100 ml, and kokumi taste-imparting substance and 1-octen-3-ol or 1-octen-3-one were added to the measured food and drink to the addition concentrations shown in Table 19.

**[Table 19]**

| name of component | Ex. 69* | Ex. 70* | Ex. 71* | Ex. 72* |
|---|---|---|---|---|
| 1-octen-3-ol | 0.0032 | 0.0032 | 0 | 0 |
| 1-octen-3-one | 0 | 0 | 0.0016 | 0.0016 |
| kokumi taste-imparting substance | 0.1 | 1 | 0.1 | 1 |

| | | | | |
|---|---|---|---|---|
| * Reference only unit: weight ppm | | | | |

### (Evaluation of Examples 69 - 72 (References only))

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor, and the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 20.

**[Table 20]**

| product field | | product or menu | Example (Reference only) | | | |
|---|---|---|---|---|---|---|
| | | | 69 | 70 | 71 | 72 |
| seasoning | flavor seasoning | chicken | ○ | ○ | ○ | ○ |

In any of Examples 69 - 72, it was confirmed that the top aroma and/or flavor, as well as the last aroma and/or flavor were sufficiently imparted to foods and drinks added with them, and the quality of the foods or drinks was improved by the impartment of these aromas and/or flavors.

### (Preparation of Examples 73 and 74)

A part of the foods and drinks shown in Table 1-1 and Table 1-2 (1.5 wt% aqueous solution of oyster sauce, noodle soup, chicken flavor seasoning) was each measured by 100 ml, and kokumi taste-imparting substance, 1-octen-3-ol, isovaleric acid and methional were added to each of the measured foods and drinks to the addition concentrations shown in Table 21.

**[Table 21]**

| name of component | Ex. 7 3 | Ex. 7 4 |
|---|---|---|
| 1-octen-3-ol | 0.0032 | 0.0032 |
| isovaleric acid | 0.068 | 0.068 |
| methional | 22.73 | 22.73 |
| kokumi taste-imparting substance | 0.1 | 1 |

| | | |
|---|---|---|
| unit: weight ppm | | |

### (Evaluation of Examples 73 and 74)

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 22.

**[Table 22]**

| product field | | product or menu | Example | |
|---|---|---|---|---|
| | | | 73 | 74 |
| Seafood | oyster | oyster sauce | ⊙ | ⊙ |
| Seasoning | soy sauce | noodle soup | ⊙ | ⊙ |
| | flavor seasoning | chicken | ⊙ | ⊙ |

In both Examples 73 and 74, it was confirmed that the top aroma and/or flavor were/was imparted to all foods and drinks added with them, and improvement of the quality of the foods or drinks and high effect by the addition of the aromas and/or flavors were confirmed.

### (Preparation of Examples 75 and 76)

A part of the foods and drinks shown in Table 1-1 and Table 1-2 (cows milk, 1.5 wt% aqueous solution of chicken flavor seasoning) was each measured by 100 ml, and kokumi taste-imparting substance, 1-octen-3-ol, decanoic acid and octanoic acid were added to each of the measured foods and drinks to the addition concentrations shown in Table 23.

**[Table 23]**

| name of component | Ex. 75 | Ex. 76 |
|---|---|---|
| 1-octen-3-ol | 0.00149 | 0.00149 |
| octanoic acid | 0.213 | 0.213 |
| decanoic acid | 0.638 | 0.638 |
| kokumi taste-imparting substance | 0.1 | 1 |

| | | |
|---|---|---|
| unit: weight ppm | | |

### (Evaluation of Examples 75 and 76)

Two to six expert panelists ate each food and drink and evaluated by comparison with the control according to the following criteria. As the control, respective foods and drinks added with a kokumi taste-imparting substance alone were used. The "expected effect" in the following criteria means that the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 24.

**[Table 24]**

| product field | | product or menu | Example | |
|---|---|---|---|---|
| | | | 75 | 76 |
| milk | cows milk | cows milk | ⊙ | ⊙ |
| seasoning | flavor seasoning | chicken | ⊙ | ⊙ |

In both Examples 75 and 76, it was confirmed that the last aroma and/or flavor were/was imparted to all foods and drinks added with them, and improvement of the quality of the foods or drinks and high effect by the impartment of the aromas and/or flavors were confirmed.

### (Preparation of Examples 77 - 80 (References only))

A part of the foods and drinks shown in Table 1-2 (1.5 wt% aqueous solution of chicken flavor seasoning) was each measured by 100 ml, and kokumi taste-imparting substance and 1-octen-3-ol or 1-octen-3-one were added to each of the measured foods and drinks to the addition concentrations shown in Table 25.

**[Table 25]**

| name of component | Ex. 77* | Ex. 78* | Ex. 79* | Ex. 80* |
|---|---|---|---|---|
| 1-octen-3-ol | 0.0032 | 0.0032 | 0 | 0 |
| 1-octen-3-one | 0 | 0 | 0.0016 | 0.0016 |
| kokumi taste-imparting substance | 0.2 | 2 | 0.2 | 2 |

| | | | | |
|---|---|---|---|---|
| * Reference only unit: weight ppm | | | | |

### (Evaluation of Examples 77 - 80 (References only))

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor, and the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 26.

**[Table 26]**

| product field | | product or menu | Example (Reference only) | | | |
|---|---|---|---|---|---|---|
| | | | 77 | 78 | 79 | 80 |
| seasoning | flavor seasoning | chicken | ○ | ○ | ○ | ○ |

In any of Examples 77 - 80, it was confirmed that the top aroma and/or flavor, as well as the last aroma and/or flavor were sufficiently imparted to all foods and drinks added with them, and the quality of the foods or drinks was improved by the impartment of these aromas and/or flavors.

### (Preparation of Examples 81 and 82)

A part of the foods and drinks shown in Table 1-1 and Table 1-2 (oyster sauce, noodle soup, 1.5 wt% aqueous solution ofchicken flavor seasoning) was each measured by 100 ml, and kokumi taste-imparting substance, 1-octen-3-ol, isovaleric acid and methional were added to each of the measured foods and drinks to the addition concentrations shown in Table 27.

**[Table 27]**

| name of component | Ex. 81 | Ex. 82 |
|---|---|---|
| 1-octen-3-ol | 0.0032 | 0.0032 |
| isovaleric acid | 0.068 | 0.068 |
| Methional | 22.73 | 22.73 |
| kokumi taste-imparting substance | 0.2 | 2 |

| | | |
|---|---|---|
| unit: weight ppm | | |

### (Evaluation of Examples 81 and 82)

Two to six expert panelists ate each food and drink and evaluated by comparison with the control according to the following criteria. As the control, respective foods and drinks added with a kokumi taste-imparting substance alone were used. The "expected effect" in the following criteria means that the top aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 28.

**[Table 28]**

| product field | | product or menu | Example | |
|---|---|---|---|---|
| | | | 81 | 82 |
| seafood | oyster | oyster sauce | ⊙ | ⊙ |
| seasoning | soy sauce | noodle soup | ⊙ | ⊙ |
| | flavor seasoning | chicken | ⊙ | ⊙ |

In both Examples 81 and 82, it was confirmed that the top aroma and/or flavor were/was imparted to all foods and drinks added with them, and improvement of the quality of the foods or drinks and high effect by the impartment of the aromas and/or flavors were confirmed.

### (Preparation of Examples 83 and 84)

A part of the foods and drinks shown in Table 1-1 and Table 1-2 (cows milk, 1.5% solution of chicken flavor seasoning) was each measured by 100 ml, and kokumi taste-imparting substance, 1-octen-3-ol, decanoic acid and octanoic acid were added to each of the measured foods and drinks to the addition concentrations shown in Table 29.

**[Table 29]**

| name of component | Ex. 83 | Ex. 84 |
|---|---|---|
| 1-octen-3-ol | 0.00149 | 0.00149 |
| octanoic acid | 0.213 | 0.213 |
| decanoic acid | 0.638 | 0.638 |
| kokumi taste-imparting substance | 0.2 | 2 |

| | | |
|---|---|---|
| unit: weight ppm | | |

### (Evaluation of Examples 83 and 84)

Two to six expert panelists ate each food and drink and evaluated by comparison with the control according to the following criteria. As the control, respective foods and drinks added with a kokumi taste-imparting substance alone were used. The "expected effect" in the following criteria means that the last aroma and/or flavor are/is imparted, and the quality of the foods or drinks is improved by the impartment of these aromas and/or flavors.

### [Evaluation criteria]

×: as compared to control, quality of aroma and/or flavor decreased
-: almost same as control (expected effect is void)
Δ: expected effect is low
○: expected effect is high
⊙: expected effect is extremely high

The results are shown in Table 30.

**[Table 30]**

| product field | | product or menu | Example | |
|---|---|---|---|---|
| | | | 83 | 84 |
| milk | cows milk | cows milk | ⊙ | ⊙ |
| seasoning | flavor seasoning | chicken | ⊙ | ⊙ |

In both Examples 83 and 84, it was confirmed that the last aroma and/or flavor were/was imparted to all foods and drinks added with them, and improvement of the quality of the foods or drinks and high effect by the impartment of the aromas and/or flavors were confirmed.

### (Production Example 1 (Reference only))

*Kokumi* taste-imparting substance (γ-Glu-Val-Gly, manufactured by Ajinomoto Co., Inc.) was stirred by a lab mixer blending machine (manufactured by Hosokawa Micron Corporation) at a rotation speed of 10 - 60 rpm. To kokumi taste-imparting substance (100 g) under stirring was added 1-octen-3-ol to a content of 27 weight ppm, and they were mixed to prepare the composition of the present invention.

### (Production Example 2)

*Kokumi* taste-imparting substance (γ-Glu-Val-Gly, manufactured by Ajinomoto Co., Inc.) was stirred by a lab mixer blending machine (manufactured by Hosokawa Micron Corporation) at a rotation speed of 10 - 60 rpm. To kokumi taste-imparting substance (97.7 g) under stirring were added 1-octen-3-ol and 1-octen-3-one to a content of 27 weight ppm, isovaleric acid to a content of 63 weight ppm, and methional to a content of 2.3 wt%, and they were mixed to prepare the composition of the present invention.

### (Production Example 3)

*Kokumi* taste-imparting substance (γ-Glu-Val-Gly, manufactured by Ajinomoto Co., Inc.) was stirred by a lab mixer blending machine (manufactured by Hosokawa Micron Corporation) at a rotation speed of 10 - 60 rpm. To kokumi taste-imparting substance (100 g) under stirring were added 1-octen-3-ol to a content of 27 weight ppm, octanoic acid to a content of 194 weight ppm, and decanoic acid to a content of 570 weight ppm, and they were mixed to prepare the composition of the present invention.

### (Production Example 4)

*Kokumi* taste-imparting substance (γ-Glu-Val-Gly, manufactured by Ajinomoto Co., Inc.) was stirred by a lab mixer blending machine (manufactured by Hosokawa Micron Corporation) at a rotation speed of 10 - 60 rpm. To kokumi taste-imparting substance (97.7 g) under stirring were added 1-octen-3-ol and 1-octen-3-one to a content of 27 weight ppm, isovaleric acid to a content of 63 weight ppm, methional to a content of 2.3 wt%, octanoic acid to a content of 194 weight ppm, and decanoic acid to a content of 570 weight ppm, and they were mixed to prepare the composition of the present invention.

### Industrial Applicability

According to the present invention, a composition capable of imparting rich and continuous kokumi taste to a food or drink, which does not mask the top aroma and/or flavor of the food or drink, and does not cut the last aroma and/or flavor can be provided.

According to the present invention, moreover, a food or drink imparted with rich and continuous kokumi taste, which sufficiently has top aroma and/or flavor, as well as the last aroma and/or flavor, and a production method of such food or drink can be provided.

## Claims

1. A composition for imparting kokumi taste to a food or drink, comprising a kokumi taste-imparting substance and 1-octen-3-ol and/or 1-octen-3-one, wherein the kokumi taste-imparting substance is one or more kinds selected from the group consisting of of γ-Glu-X-Gly (X is amino acid or amino acid derivative), γ-Glu-Val-Y (Y is amino acid or amino acid derivative), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu and γ-Glu-Cys(S-Me),
the content of the kokumi tast-imparting substance in the composition is not less than 0.001 weight ppm and not more than 99.9 wt%, and
the content of 1-octen-3-ol and/or 1-octen-3-one in the composition is 0.000005 weight ppm - 99.9 wt%, wherein the composition additionally comprises (i)lower fatty acid and methional, and/or (ii) octanoic acid and decanoic acid.

2. The composition according to claim 1, wherein
the content of lower fatty acid in the composition is 0.001 weight ppm - 99.9 wt%, and
the content of methional in the composition is 0.00001 weight ppm - 99.9 wt%.

3. The composition according to claim 1, wherein
the content of octanoic acid in the composition is 0.001 weight ppm - 99.9 wt%, and
the content of decanoic acid in the composition is 0.001 weight ppm - 99.9 wt%.

4. The composition according to claim 1, comprising lower fatty acid, methional, octanoic acid and decanoic acid.

5. A production method of a food or drink, comprising a step of adding a kokumi taste-imparting substance and 1-octen-3-ol and/or 1-octen-3-one, wherein the kokumi taste-imparting substance is one or more kinds selected from the group consisting of of γ-Glu-X-Gly (X is amino acid or amino acid derivative), γ-Glu-Val-Y (Y is amino acid or amino acid derivative), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu and γ-Glu-Cys(S-Me),
the concentration of the kokumi taste-imparting substance to be added relative to the food or drink is not less than 0.001 weight ppm and not more than 99.9 wt%, and
the concentration of 1-octen-3-ol and/or 1-octen-3-one to be added relative to the food or drink is not less than 0.000005 weight ppm and not more than 0,91 weight ppm, wherein the method further comprises (i) a step of adding lower fatty acid and methional, and/or (ii) a step of adding octanoic acid and decanoic acid.

6. The method according to claim 5, wherein
the concentration of lower fatty acid to be added relative to the food or drink is not less than 0.001 weight ppm and not more than 19.3 weight ppm, and
the concentration of methional to be added relative to the food or drink is not less than 0.00001 weight ppm and not more than 150 weight ppm.

7. The method according to claim 5, wherein
the concentration of octanoic acid to be added relative to the food or drink is not less than 0.001 weight ppm and not more than 130 weight ppm, and
the concentration of decanoic acid to be added relative to the food or drink is not less than 0.001 weight ppm and not more than 390 weight ppm.

8. The method according to claim 5, comprising a step of adding lower fatty acid, methional, octanoic acid and decanoic acid.

9. A food or drink produced by the method according to any one of claims 5 to 8.

## Patentansprüche

1. Zusammensetzung, um einem Nahrungsmittel oder Getränk einen Kokumigeschmack zu verleihen, umfassend eine Kokumigeschmack-verleihende Substanz und 1-Octen-3-ol und/oder 1-Octen-3-on, wobei die Kokumigeschmack-verleihende Substanz eine oder mehrere Arten ist, die aus der aus γ-Glu-X-Gly (X ist eine Aminosäure oder ein Aminosäurederivat), γ-Glu-Val-Y (Y ist eine Aminosäure oder ein Aminosäurederivat), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu und γ-Glu-Cys(S-Me) bestehenden Gruppe ausgewählt ist,
der Gehalt der Kokumigeschmack-verleihenden Substanz in der Zusammensetzung nicht weniger als 0,001 Gewichts-ppm und nicht mehr als 99,9 Gew.-% beträgt, und
der Gehalt an 1-Octen-3-ol und/oder 1-Octen-3-on in der Zusammensetzung 0,000005 Gewichts-ppm - 99,9 Gew.-% beträgt, wobei die Zusammensetzung zusätzlich (i) niedere Fettsäure und Methional und/oder (ii) Octansäure und Decansäure umfasst.

2. Die Zusammensetzung nach Anspruch 1, wobei
der Gehalt an niederer Fettsäure in der Zusammensetzung 0,001 Gewichts-ppm - 99,9 Gew.-% beträgt, und
der Gehalt an Methional in der Zusammensetzung 0,00001 Gewichts-ppm - 99,9 Gew.-% beträgt.

3. Die Zusammensetzung nach Anspruch 1, wobei
der Gehalt an Octansäure in der Zusammensetzung 0,001 Gewichts-ppm - 99,9 Gew.-% beträgt, und
der Gehalt an Decansäure in der Zusammensetzung 0,001 Gewichts-ppm - 99,9 Gew.-% beträgt.

4. Zusammensetzung nach Anspruch 1, umfassend niedere Fettsäure, Methional, Octansäure und Decansäure.

5. Verfahren zur Herstellung eines Nahrungsmittels oder Getränks, umfassend einen Schritt der Zugabe einer Kokumigeschmack-verleihenden Substanz und 1-Octen-3-ol und/oder 1-Octen-3-on, wobei die Kokumigeschmack-verleihende Substanz eine oder mehrere Arten ist, die aus der aus γ-Glu-X-Gly (X ist eine Aminosäure oder ein Aminosäurederivat), γ-Glu-Val-Y (Y ist eine Aminosäure oder ein Aminosäurederivat), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu und γ-Glu-Cys(S-Me) bestehenden Gruppe ausgewählt ist,
die Konzentration der hinzuzugebenden Kokumigeschmack-verleihenden Substanz in Bezug auf das Lebensmittel oder Getränk nicht weniger als 0,001 Gewichts-ppm und nicht mehr als 99,9 Gew.-% beträgt, und
die Konzentration des zuzugebenden 1-Octen-3-ols und/oder 1-Octen-3-ons in Bezug auf das Lebensmittel oder Getränk nicht weniger als 0,000005 Gewichts-ppm und nicht mehr als 0,91 Gewichts-ppm beträgt, wobei das Verfahren ferner (i) einen Schritt der Zugabe von niederer Fettsäure und Methional und/oder (ii) einen Schritt der Zugabe von Octansäure und Decansäure umfasst.

6. Verfahren nach Anspruch 5, wobei
die Konzentration der zuzugebenden niedrigeren Fettsäure in Bezug auf das Lebensmittel oder Getränk nicht weniger als 0,001 Gewichts-ppm und nicht mehr als 19,3 Gewichts-ppm beträgt und
die Konzentration des zuzugebenden Methionals in Bezug auf das Lebensmittel oder Getränk nicht weniger als 0,00001 Gewichts-ppm und nicht mehr als 150 Gewichts-ppm beträgt.

7. Verfahren nach Anspruch 5, wobei
die Konzentration der zuzusetzenden Oktansäure in Bezug auf das Lebensmittel oder Getränk nicht weniger als 0,001 Gewichts-ppm und nicht mehr als 130 Gewichts-ppm beträgt, und
die Konzentration der zuzusetzenden Decansäure in Bezug auf das Lebensmittel oder Getränk nicht weniger als 0,001 Gewichts-ppm und nicht mehr als 390 Gewichts-ppm beträgt.

8. Verfahren nach Anspruch 5, umfassend einen Schritt der Zugabe von niederer Fettsäure, Methional, Octansäure und Decansäure.

9. Lebensmittel oder Getränk, hergestellt durch das Verfahren nach einem der Ansprüche 5 bis 8.

## Revendications

1. Composition pour conférer un goût de kokumi à un aliment ou une boisson, comprenant une substance conférant un goût de kokumi et du 1-octén-3-ol et/ou de la 1-octén-3-one, dans laquelle la substance conférant un goût de kokumi est un ou plusieurs types choisis dans le groupe constitué par γ-Glu-X-Gly (X est un acide aminé ou un dérivé d'acide aminé), γ-Glu-Val-Y (Y est un acide aminé ou un dérivé d'acide aminé), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu et γ-Glu-Cys(S-Me),
la teneur en la substance conférant un goût de kokumi dans la composition n'est pas inférieure à 0,001 ppm en poids et pas supérieure à 99,9 % en poids, et
la teneur en 1-octén-3-ol et/ou 1-octén-3-one de la composition est de 0,000005 ppm en poids à 99,9 % en poids, dans laquelle la composition comprend de plus (i) un acide gras inférieur et du méthional, et/ou (ii) de l'acide octanoïque et de l'acide décanoïque.

2. Composition selon la revendication 1, dans laquelle
la teneur en acide gras inférieur de la composition est de 0,001 ppm en poids à 99,9 % en poids, et
la teneur en méthional de la composition est de 0,00001 ppm en poids à 99,9 % en poids.

3. Composition selon la revendication 1, dans laquelle
la teneur en acide octanoïque de la composition est de 0,001 ppm en poids à 99,9 % en poids, et
la teneur en acide décanoïque de la composition est de 0,001 ppm en poids à 99,9 % en poids.

4. Composition selon la revendication 1, comprenant un acide gras inférieur, du méthional, de l'acide octanoïque et de l'acide décanoïque.

5. Procédé de production d'un aliment ou d'une boisson, comprenant une étape d'addition d'une substance conférant un goût de kokumi et de 1-octén-3-ol et/ou de 1-octén-3-one, dans lequel la substance conférant un goût de kokumi est un ou plusieurs types choisis dans le groupe constitué par γ-Glu-X-Gly (X est un acide aminé ou un dérivé d'acide aminé), γ-Glu-Val-Y (Y est un acide aminé ou un dérivé d'acide aminé), γ-Glu-Abu, γ-Glu-N-Val, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu et γ-Glu-Cys(S-Me),
la concentration de la substance conférant un goût de kokumi à ajouter par rapport à l'aliment ou à la boisson n'est pas inférieure à 0,001 ppm en poids et pas supérieure à 99,9 % en poids, et
la concentration de 1-octén-3-ol et/ou 1-octén-3-one à ajouter par rapport à l'aliment ou à la boisson n'est pas inférieure à 0,000005 ppm en poids et pas supérieure à 0,91 ppm en poids, dans lequel le procédé comprend en outre (i) une étape d'addition d'acide gras inférieur et de méthional, et/ou (ii) une étape d'addition d'acide octanoïque et d'acide décanoïque.

6. Procédé selon la revendication 5, dans lequel la concentration d'acide gras inférieur à ajouter par rapport à l'aliment ou à la boisson n'est pas inférieure à 0,001 ppm en poids et pas supérieure à 19,3 ppm en poids, et
la concentration de méthional à ajouter par rapport à l'aliment ou à la boisson n'est pas inférieure à 0,00001 ppm en poids et pas supérieure à 150 ppm en poids.

7. Procédé selon la revendication 5, dans lequel la concentration d'acide octanoïque à ajouter par rapport à l'aliment ou à la boisson n'est pas inférieure à 0,001 ppm en poids et pas supérieure à 130 ppm en poids, et
la concentration d'acide décanoïque à ajouter par rapport à l'aliment ou à la boisson n'est pas inférieure à 0,001 ppm en poids et pas supérieure à 390 ppm en poids.

8. Procédé selon la revendication 5, comprenant une étape d'addition d'acide gras inférieur, de méthional, d'acide octanoïque et d'acide décanoïque.

9. Aliment ou boisson produit par le procédé de l'une quelconque des revendications 5 à 8.
